(19) Europäisches Patentamt
European Patent Office
Office européen des brevets

(11) **EP 2 421 204 B1**

(12) **EUROPÄISCHE PATENTSCHRIFT**

(45) Veröffentlichungstag und Bekanntmachung des Hinweises auf die Patenterteilung:
**30.10.2019 Patentblatt 2019/44**

(51) Int Cl.:
***H04L 12/40*** *(2006.01)*

(21) Anmeldenummer: **11177796.7**

(22) Anmeldetag: **17.08.2011**

(54) **Zeit- und Prioritäts-gesteuerter Sende/empfangsknoten**

Time and priority-controlled transmitting/receiver node

Noeud d'émission/de réception commandé de manière temporelle et prioritaire

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.08.2010 DE 102010039488**

(43) Veröffentlichungstag der Anmeldung:
**22.02.2012 Patentblatt 2012/08**

(73) Patentinhaber: **Technische Universität Kaiserslautern**
**67663 Kaiserslautern (DE)**

(72) Erfinder:
• **Kuhn, Thomas**
**67657 Kaiserslautern (DE)**
• **Gotzhein, Reinhard**
**67661 Kaiserslautern (DE)**

(74) Vertreter: **Hersina, Günter et al**
**Schoppe, Zimmermann, Stöckeler Zinkler, Schenk & Partner mbB Patentanwälte Radlkoferstrasse 2 81373 München (DE)**

(56) Entgegenhaltungen:
**EP-A2- 1 179 919 US-A1- 2003 137 989**

• **XI CHEN ET AL: "Optimization for the reliability of TTCAN bus based on Genetic Algorithms", CYBERNETICS AND INTELLIGENT SYSTEMS, 2008 IEEE CONFERENCE ON, IEEE, PISCATAWAY, NJ, USA, 21 September 2008 (2008-09-21), pages 1348-1352, XP031441694, ISBN: 978-1-4244-1673-8**

**Beschreibung**

Ausführungsbeispiele der vorliegenden Erfindung beziehen sich auf einen Sende/Empfangsknoten, insbesondere auf einen Sende/Empfangsknoten, der über eine Schnittstelle mit einem Übertragungsmedium verbindbar ist und der basierend auf einem Zeitplan und einer Sendepriorität dem Übertragungsmedium einen Rahmen einer verfügbaren Nachricht bereitstellt.

Die Rechnerkommunikation im Bereich von Echtzeitsystemen, die über drahtgebundene Datenbusse vernetzt sind, basiert in der Regel auf ereignisgesteuerten (event-triggered) und zeitgesteuerten (time-triggered) Protokollen. Bei ereignisgesteuerten Protokollen werden Nachrichten nur gesendet, falls ein auslösendes Ereignis eintritt, z. B. wenn ein Schalter gedrückt oder ein Schwellwert überschritten wird. Bei zeitgesteuerten Protokollen werden Nachrichten zu vorbestimmten Zeitpunkten übertragen, wodurch das Netzwerk ein deterministisches Verhalten aufweist. Sofern der Datenverkehr sporadisch entsteht, weisen ereignisgesteuerte Protokolle einen geringeren Ressourcenverbrauch auf. Allerdings sind bei ereignisgesteuerten Protokollen nur begrenzte Echtzeitgarantien möglich, falls mehrere Ereignisse fast gleichzeitig eintreten und dies womöglich bei unterschiedlichen Knoten bzw. Stationen. Zur Einhaltung harter Echtzeitgarantien sind, im Falle von periodischem Datenverkehr, zeitgesteuerte Protokolle vorzuziehen. Der Einsatz von zeitgesteuerten Protokollen bei sporadischem Datenverkehr und kleinen maximalen Antwortzeiten führt jedoch zu einer massiven Verschwendung von Bandbreite, da der ungünstigste Fall zugrunde gelegt werden muss, z. B. die maximale Antwortzeit oder der minimale zeitliche Abstand zwischen Ereignissen.

In einem typischen Szenario eines Kraftfahrzeugs konkurrieren Netzwerkkomponenten der Karosserie, des Antriebsstrangs, der Sicherheit, des Komforts und der Unterhaltung um Netzwerkressourcen. Aufgrund sehr unterschiedlicher Anforderungen hinsichtlich Bandbreite, Verzögerung, Verzögerungsschwankungen (jitter), Zuverlässigkeit und Echtzeitgarantien wird im Automotive Bereich eine Kombination mehrerer Kommunikationstechnologien verwendet. Zu diesen Technologien zählen CAN (controller area network), TTCAN (time-triggered CAN = zeitgesteuertes CAN), Flex-Ray, MOST (media-oriented system transport = Transport in Medien-orientierten Systemen) und LIN (local interconnect network = lokales Verbindungsnetzwerk).

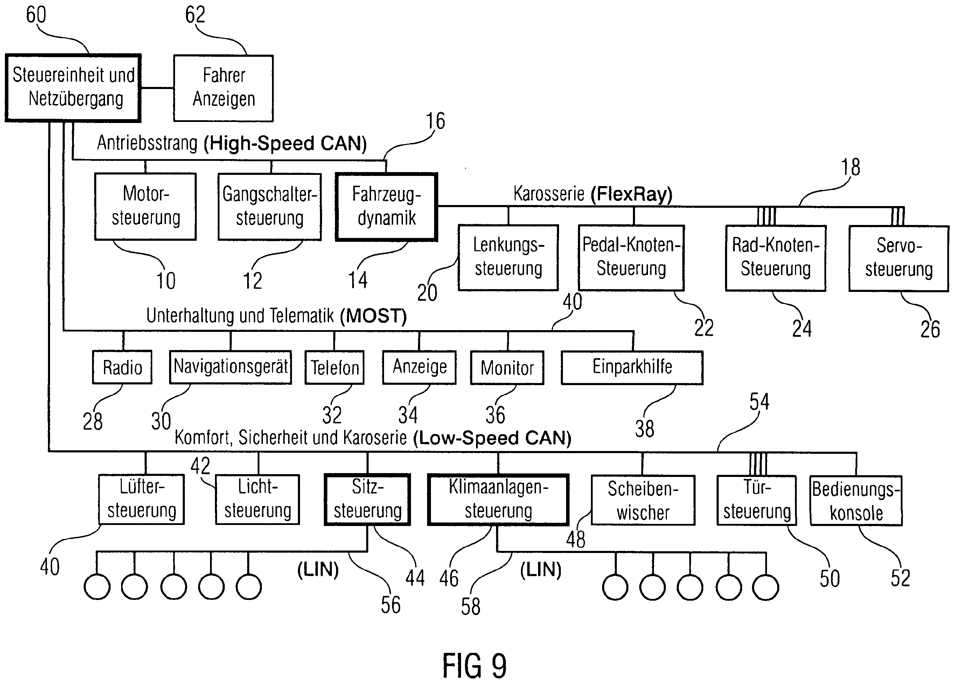

Fig. 9 zeigt eine bekannte Vernetzung von Echtzeitsystemen (real time systems) eines Kraftfahrzeugs unter Verwendung einer Mehrzahl drahtgebundener Datenbusse. Die Netzwerkkomponenten des Antriebsstrangs, z. B. eine Motorsteuerung (engine control) 10, eine Gangschaltungssteuerung (gear box control) 12 und eine Fahrzeugdynamik (vehicle dynamics) 14, werden in der Regel über einen schnellen CAN-Bus (high-speed CAN) 16 miteinander vernetzt. Der FlexRay-Bus 18 wird für drahtgebundene Systeme (by-wire systems) zum Lenken und Bremsen verwendet und vernetzt somit z. B. die Fahrzeugdynamik 14, eine Lenkungssteuerung (steering control) 20, eine Pedal-Knoten-Steuerung (pedal node control) 22, eine Rad-Knoten-Steuerung (wheel node control) 24 und eine Servosteuerung (servo control) 26. Ferner werden Unterhaltungs- und Telematik-Komponenten, z. B. ein Radio 28, ein Navigationsgerät 30, ein Telefon 32, eine Anzeige 34, ein Monitor 36 und eine Einparkhilfe 38 über den MOST-Bus 40 miteinander vernetzt. Netzwerkkomponenten, die Komfort, Sicherheit und einfache Karosseriefunktionen betreffen, z. B. eine Lüftersteuerung (fan control) 40, eine Lichtsteuerung (light control) 42, eine Sitzsteuerung (seat control) 44, eine Klimaanlagensteuerung (air condition control) 46, ein Scheibenwischer 48, eine Türsteuerung (door control) 50 und eine Bedienungskonsole (control panel) 52 werden in der Regel über einen langsamen CAN-Bus (low-speed CAN) 54 miteinander vernetzt. Die beiden LIN-Busse 56 und 58 können z. B. für die Vernetzung weiterer Klimatisierungs- bzw. Sitzeinstellungs-Komponenten genutzt werden. Ferner sind der schnelle CAN-Bus 16, der MOST-Bus 40 und der langsame CAN-Bus 54 mit einer Steuereinheit mit Netzübergang (control unit + gateway) 60 verbunden, wobei die Steuereinheit mit Netzübergang 60 ferner mit den Anzeigen für den Fahrer (driver displays) 62 vernetzt ist.

Darüber hinaus werden Kraftfahrzeuge je nach Kundenanforderungen in vielen verschiedenen Konfigurationen hergestellt. Diese Konfigurationen können des Weiteren verschiedene Kommunikationsmuster aufweisen, die von der dynamischen Nutzung des Fahrzeugs und der Straßensituation abhängen. Um ein ausgiebiges Testen aller möglichen Konfigurationen in allen möglichen Einsatzszenarien zu vermeiden, muss das Kommunikationssystem eine Komponierbarkeit in dem Sinne unterstützen, dass Kommunikationseigenschaften jederzeit erhalten bleiben. Zum Beispiel darf ein Hinzufügen von weiteren Airbags und Radsensoren oder das Hinzufügen eines Schiebedachs den zeitgerechten Betrieb anderer, z. B. sicherheitsrelevanter, Komponenten nicht beeinträchtigen. Zur Lösung dieses Problems ist z. B. eine zeitliche Einkapselung (temporal encapsulation) von Knoten bekannt, wobei individuellen Knoten im Vorfeld festgelegte Zeitschlitze (time slots) zugeordnet werden. Ein Nachteil dieser Lösung besteht in einer Überdimensionierung von Kommunikationssystemen, um alle möglichen Konfigurationen und Kommunikationsmuster abzudecken.

Um vorhersagbare Verzögerungszeiten und Kommunikationsbandbreiten zu garantieren, erfolgt in der Regel eine präzise Zeitplanung (scheduling) und Zuweisung von Kommunikationsressourcen zum Zeitpunkt der Entwicklung vor Ausführung (offline). Darüber hinaus müssen für deterministische Garantien die ungünstigsten Situationen berücksichtigt werden. Dies führt zu einer massiven Verschwendung von Ressourcen in allen normalen Situationen, bei denen in der Regel eine weitaus geringere Kommunikationsbandbreite erforderlich ist.

Verfahren zur verbesserten Auslastung drahtgebundener Datenbusse sind im Automotive Bereich bekannt.

Beispielsweise können der Veröffentlichung SMART-Plan: A New Message Scheduler for Real-time Control Networks, ISSC 2005 von M. Naughton und D. Heffernan und der Veröffentlichung Systematic Message Schedule Construction for Time-Triggered CAN, IEEE Transactions on Vehicular Technology, Special Issue on Vehicular Communication Networks, Vol. 56 von K. Schmidt und E. G. Schmidt, Ansätze zur Berechnung optimaler Zeitpläne für TTCAN entnommen werden. Ferner können der Veröffentlichung Message Scheduling for the FlexRay Protocol: The Dynamic Segment, IEEE Transactions on Vehicular Technology, Vol. 58 von E. Schmidt und K. Schmidt und der Veröffentlichung Message Scheduling for the FlexRay Protocol: The Static Segment, IEEE Transactions on Vehicular Technology, Vol. 58 von K. Schmidt und E. G. Schmidt, Ansätze zur Berechnung von Zeitplänen für das dynamische und das statische Segment von FlexRay entnommen werden. Diese Verfahren gehen davon aus, dass der Zugriff auf einen Zeitschlitz entweder exklusiv (ein Knoten) oder prioritätsbasiert (alle Knoten) erfolgt, wobei die Realzeitanforderungen (real-time requirements) gegeben sind. Im ersten Fall soll z. B. die Auslastung verbessert werden, im zweiten Fall z. B. die Länge des dynamischen Segments.

Den bekannten Lösungen zur Bestimmung verbesserter Zeitpläne für ereignisgesteuerte und zeitgesteuerte Protokolle liegen somit scharfe Restriktionen zugrunde, entweder erfolgt der Zugriff auf ein Übertragungsmedium exklusiv oder prioritätsbasiert. Damit ist der Suchraum zum Auffinden verbesserter Lösungen von vorneherein stark beschränkt. Ein weiterer Nachteil bekannter Lösungen ist der prioritätsbasierte Wettbewerb, zu dem alle Knoten zugelassen sind. Dies schränkt die möglichen Echtzeitgarantien im Fall mehrerer, fast gleichzeitig auftretender Ereignisse stark ein.

Des Weiteren sind dynamische Zuweisungsverfahren bekannt, bei denen die Knoten mit einem Ressourcenverwalter in Verbindung stehen. Dies führt jedoch zu einem erheblich höheren Datenverkehr (overhead), zu höheren Verzögerungszeiten und zu einem ungewissen Resultat.

Die EP 1 179 919 A2 zeigt ein MAC-Protokoll (MAC = Media Access Control, dt. Medienzugriffssteuerung) mit Prioritätsintervallen und zugriffskonfliktfreien Intervallen.

Die US 2003/0137989 A1 zeigt ein Kommunikationsapparat zur Übertragung eine Pakets zwischen mehreren Kommunikationsapparaten.

Das Dokument "Optimization for the reliability of TTCAN bus based on Genetic Algorithms", veröffentlicht am 21.09.2009, Coference Proceedings Article, beschreibt einen Sende/Empfangsknoten, der so ausgebildet ist, um bei einer Abfolge von Zeitabschnitten das Auftreten einer ersten Bedingung und einer zweiten Bedingung zu erfassen und, falls die erste und die zweite Bedingung für einen einer verfügbaren Nachricht zugeordneten Zeitabschnitt erfüllt sind, um dem Übertragungsmedium während des zugeordneten Zeitabschnitts einen Rahmen der verfügbaren Nachricht über die Schnittstelle zu übertragen, wobei die erste Bedingung gemäß einem Zeitplan den zugeordneten Zeitabschnitt zum Bereitstellen des Rahmens der verfügbaren Nachricht angibt, und wobei die zweite Bedingung angibt, dass die der verfügbaren Nachricht zugeordnete Sendepriorität für den zugeordneten Zeitabschnitt die höchste Sendepriorität unter den Sendeprioritäten der verfügbaren Nachrichten der mit dem Übertragungsmedium verbundenen Sende/Empfangsknoten für denselben zugeordneten Zeitabschnitt ist.

Der vorliegenden Erfindung liegt somit die Aufgabe zugrunde, einen Sende/Empfangsknoten für ein Bussystem mit einem Datenbus mit Mehrfachzugriff im Echtzeitbetrieb zu schaffen, der mit einer hohen Zuverlässigkeit und relativ geringen Ressourcenanforderungen einen geregelten Zugriff auf ein Übertragungsmedium ermöglicht.

Diese Aufgabe wird gemäß einem Sende/Empfangsknoten nach Anspruch 1, einem Verfahren zum Betreiben eines Sende/Empfangsknotens nach Anspruch 14 gelöst.

Die Ausführungsbeispiele die nicht ein Teil der beanspruchten/vorliegenden Erfindung sind, dienen als Beispiele und Hintergrundinformationen. Die Erfindung ist durch die Merkmale der unabhängigen Patentansprüche definiert. Ausführungsbeispiele der vorliegenden Erfindung werden nachfolgend unter Bezugnahme auf die beiliegenden Abbildungen näher erläutert. Es zeigen:

Fig. 1a     eine schematische Ansicht eines Ausführungsbeispiels eines Sende/Empfangsknotens mit einer Schnittstelle zum Verbinden mit einem Übertragungsmedium;

Fig. 1b     eine schematische Ansicht eines Sende/Empfangsknotens mit einem optionalen Speicher zum Ablegen des Zeitplans mit den zugeordneten Zeitabschnitten und/oder der Sendepriorität der bereit zu stellenden Nachricht;

Fig. 2     eine schematische Ansicht eines Ausführungsbeispiels eines dem Sende/Empfangsknoten zugeordneten Zeitabschnitts;

Fig. 3     ein Bussystem mit einem Datenbus und einer Mehrzahl von Sende/Empfangsknoten;

Fig. 4     eine schematische Ansicht einer zeitlichen Strukturierung der Belegung des Übertragungsmediums in Zeitintervalle;

Fig. 5    ein Ausführungsbeispiel einer Zuweisung von Zeitabschnitten in einer tabellarischen Anordnung für ein vereinfachtes Szenario eines Kraftfahrzeugs;

Fig. 6    ein Ausführungsbeispiel einer Zuweisung von Rahmen, die mit einer Zuweisung von Zeitabschnitten in Einklang steht, in einer tabellarischen Anordnung;

Fig. 7    die zeitliche Strukturierung der Belegung des Übertragungsmediums bei TTCAN;

Fig. 8    die zeitliche Strukturierung der Belegung des Übertragungsmediums bei FlexRay; und

Fig. 9    eine bekannte Vernetzung von Echtzeitsystemen eines Kraftfahrzeugs unter Verwendung einer Mehrzahl
drahtgebundener Datenbusse.

In der nachfolgenden Beschreibung der Ausführungsbeispiele der Erfindung werden in den Abbildungen gleiche oder gleich wirkende Elemente mit den gleichen Bezugszeichen versehen, so dass deren Beschreibung in den unterschiedlichen Ausführungsbeispielen untereinander austauschbar ist.

Fig. la zeigt eine schematische Ansicht eines Ausführungsbeispiels eines Sende/Empfangsknotens 100 mit einer Schnittstelle 102 zum Verbinden mit einem Übertragungsmedium. Der Sende/Empfangsknoten 100 weist ferner eine Verarbeitungseinrichtung 104 auf, die ausgebildet ist, um bei einer Abfolge von Zeitabschnitten das Auftreten einer ersten Bedingung und einer zweiten Bedingung zu erfassen und, falls die erste und die zweite Bedingung für einen zugeordneten Zeitabschnitt erfüllt ist, um dem Übertragungsmedium während des zugeordneten Zeitabschnitts einen Rahmen einer verfügbaren Nachricht über die Schnittstelle 102 bereitzustellen, wobei für die Übermittlung der Nachricht ein oder mehrere Rahmen (z. B. Datenrahmen) erforderlich sein können und wobei ein Rahmen einen oder mehrere logische Werte (Bits) aufweisen kann. Die Anzahl der erforderlichen Rahmen pro Nachricht und die Anzahl der erforderlichen logischen Werte pro Rahmen können z. B. von der Größe oder vom Typ der Nachricht abhängen. Die erste Bedingung gibt dabei gemäß einem Zeitplan den zugeordneten Zeitabschnitt zum Bereitstellen des Rahmens der verfügbaren Nachricht an, während die zweite Bedingung angibt, dass die der Nachricht zugeordnete Sendepriorität für den zugeordneten Zeitabschnitt höher ist als eine weitere Sendepriorität einer weiteren verfügbaren Nachricht eines weiteren, mit dem Übertragungsmedium verbundenen Sende/Empfangsknotens.

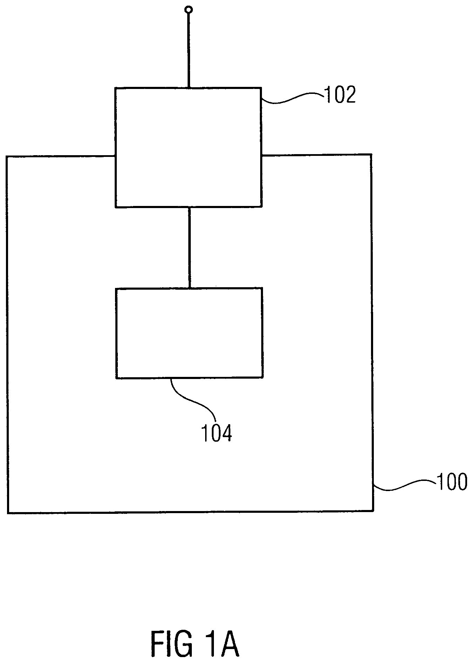

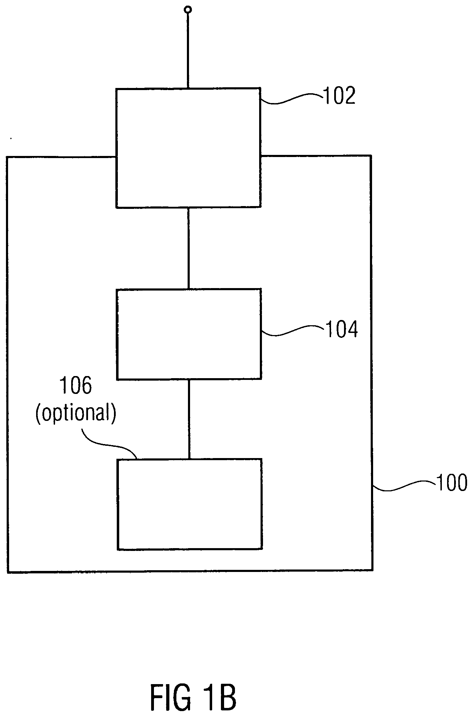

Fig. 1b zeigt eine schematische Ansicht eines Sende/Empfangsknotens 100 mit einem optionalen Speicher 106 zum Ablegen des Zeitplans mit den zugeordneten Zeitabschnitten und/oder der Sendepriorität der bereit zu stellenden Nachricht. Bei Ausführungsbeispielen kann der Speicher 106 ferner derart ausgebildet sein, dass der im Speicher 106 abgelegte Zeitplan mit den zugeordneten Zeitabschnitten und/oder die Sendepriorität der bereit zu stellenden Nachricht aktualisierbar ist. Ferner kann der Zeitplan einen oder mehrere dem Sende/Empfangsknoten 100 zugeordnete Zeitabschnitte aufweisen. Basierend auf dem Zeitplan mit den zugeordneten Zeitabschnitten und basierend auf der Sendepriorität der bereit zu stellenden Nachricht kann die Verarbeitungseinrichtung 104 erfassen, wann und ob der Rahmen der verfügbaren Nachricht dem Übertragungsmedium über die Schnittstelle 102 bereit zu stellen ist.

Der Sende/Empfangsknoten 100 kann bei Ausführungsbeispielen ferner ausgebildet sein, um die Sendepriorität der verfügbaren Nachricht oder eine davon abgeleitete Information dem Übertragungsmedium über die Schnittstelle 102 bereit zu stellen. Des Weiteren kann der Sende/Empfangsknoten 100 ausgebildet sein, um die Sendepriorität oder eine davon abgeleitete Information einer weiteren Nachricht eines weiteren, mit dem Übertragungsmedium verbundenen Sende/Empfangsknotens über die Schnittstelle 102 zu empfangen, um die empfangene Sendepriorität oder eine davon abgeleitete Information mit der Sendepriorität der eigenen verfügbaren Nachricht oder einer davon abgeleiteten Information zu vergleichen. Die von der Sendepriorität abgeleitete Information kann beispielsweise eine verschlüsselte Version der Sendepriorität umfassen oder einen der Sendepriorität zugeordneten Wert, wobei z. B. höhere Werte eine höhere Sendepriorität kennzeichnen können oder umgekehrt. Nachfolgend wird zur Verbesserung der Verständlichkeit der Begriff Sendepriorität verwendet, wobei bei Ausführungsbeispielen die Sendepriorität oder eine von der Sendepriorität abgeleitete Information verwendet werden kann.

Wenn die empfangene Sendepriorität für den zugeordneten Zeitabschnitt eine niedrigere Präferenz als die Sendepriorität der eigenen verfügbaren Nachricht aufweist, dann kann der zugeordnete Zeitabschnitt von dem Sende/Empfangsknoten 100 zum Senden bzw. zum Bereitstellen des Rahmens der verfügbaren Nachricht genutzt werden. Der Sende/Empfangsknoten 100 kann darüber hinaus auch mehrere Sendeprioritäten empfangen und die Sendepriorität der eigenen verfügbaren Nachricht mit den empfangenen Sendeprioritäten vergleichen. Der Sende/Empfangsknoten, der die Nachricht mit der höchsten Sendepriorität aufweist, gewinnt also den begrenzten Wettbewerb für den zugeordneten Zeitabschnitt und kann den Rahmen der verfügbaren Nachricht übermitteln.

Ferner kann der Sende/Empfangsknoten 100 bei Ausführungsbeispielen ausgebildet sein, um dem Übertragungsmedium über die Schnittstelle 102 keine Sendepriorität bereit zu stellen, falls der Sende/Empfangsknoten 100 zu dem zugeordneten Zeitabschnitt keine verfügbare Nachricht aufweist. Der Sende/Empfangsknoten 100 nimmt somit nicht an dem begrenzten Wettbewerb für den zugeordneten Zeitabschnitt teil, wodurch ein weiterer, mit dem Übertragungsmedium verbundener Sende/Empfangsknoten, der eine Nachricht mit z. B. einer niedrigeren Präferenz bzw. Sendepriorität aufweist, den zugeordneten Zeitabschnitt für die Übermittlung des Rahmens der verfügbaren Nachricht niedrigerer Präferenz nutzen kann. Dies ermöglicht eine deutlich effektivere Nutzung der vorhandenen Bandbreite des Übertragungsmediums bei gleichzeitiger Einhaltung der Echtzeitgarantien.

Darüber hinaus kann der Sende/Empfangsknoten 100 ausgebildet sein, falls die erste Bedingung erfüllt ist und der Sende/Empfangsknoten 100 mehrere verfügbare Nachrichten unterschiedlicher Sendepriorität aufweist, um die verfügbare Nachricht mit der höchsten Sendepriorität zu ermitteln, und um die ermittelte höchste Sendepriorität dem Übertragungsmedium über die Schnittstelle 102 bereit zu stellen. Falls ein Sende/Empfangsknoten 100 also mehrere Nachrichten unterschiedlicher Sendepriorität aufweist, so kann zunächst ein lokaler Wettbewerb zwischen den Nachrichten des Sende/Empfangsknoten 100 entstehen. Lokaler Wettbewerb bedeutet dabei, dass der Sende/Empfangsknoten 100 die Sendeprioritäten der eigenen verfügbaren Nachrichten auswertet, um z. B. die höchste Sendepriorität zu ermitteln. Den lokalen Wettbewerb gewinnt beispielsweise die Nachricht, die die höchste Sendepriorität aufweist. Anschließend stellt der Sende/Empfangsknoten 100 zu dem zugeordneten Zeitabschnitt die ermittelte höchste Sendepriorität über die Schnittstelle 102 dem Übertragungsmedium bereit, wodurch es, falls ein weiterer bzw. mehrere weitere Sende/Empfangsknoten zu dem zugeordneten Zeitabschnitt eine verfügbare Nachricht aufweisen, zu einem globalen Wettbewerb kommt. Globaler Wettbewerb bedeutet dabei, dass der Sende/Empfangsknoten 100 die Sendepriorität bzw. Sendeprioritäten der weiteren verfügbaren Nachrichten der weiteren, mit dem Übertragungsmedium verbundenen Sende/Empfangsknoten auswertet. Diesen globalen Wettbewerb für den zugeordneten Zeitabschnitt gewinnt immer die Nachricht, die die höchste Sendepriorität aufweist.

Nachfolgend wird bei Ausführungsbeispielen davon ausgegangen, dass der Sende/Empfangsknoten 100 immer die Sendepriorität der Nachricht signalisiert, die den lokalen Wettbewerb gewonnen hat. Ferner bezieht sich nachfolgend der Begriff Wettbewerb, sofern nicht anders angegeben, immer auf den globalen Wettbewerb, an dem mehrere Sende/Empfangsknoten teilnehmen können.

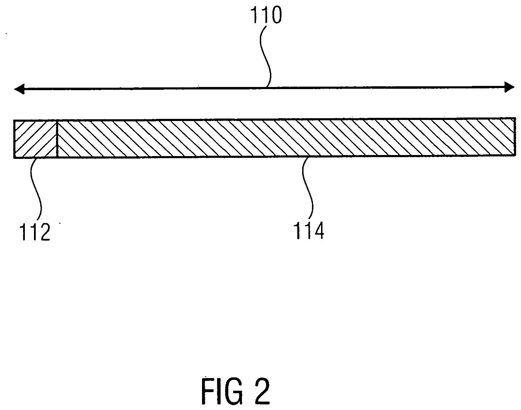

Fig. 2 zeigt eine schematische Ansicht eines Ausführungsbeispiels eines dem Sende/Empfangsknoten 100 zugeordneten Zeitabschnitts 110. Der dem Sende/Empfangsknoten 100 zugeordnete Zeitabschnitt 110 kann in Unterabschnitte unterteilt werden, wobei der Sende/Empfangsknoten 100 ausgebildet ist, um in einem ersten Unterabschnitt 112 die Sendepriorität der verfügbaren Nachricht dem Übertragungsmedium über die Schnittstelle 102 bereitzustellen und um in einem weiteren Unterabschnitt 114 den oder die Rahmen der verfügbaren Nachricht über die Schnittstelle 102 bereitzustellen, falls keine höhere Sendepriorität empfangen wird. Hierzu kann der Sende/Empfangsknoten z. B. ausgebildet sein, um den Vergleich der Sendepriorität der eigenen Nachricht mit der empfangenen Sendepriorität während des ersten Unterabschnitts des zugeordneten Zeitabschnitts durchzuführen. Die Erfindung ist aber nicht auf ein solches Ausführungsbeispiel beschränkt, sondern vielmehr kann der Zeitabschnitt 110 darüber hinaus in weitere Unterabschnitte unterschiedlicher Länge unterteilt werden.

Für den Fall, dass der Sende/Empfangsknoten 100 eine verfügbare Nachricht aufweist, jedoch den begrenzten Wettbewerb für den zugeordneten Zeitabschnitt verliert, da eine höhere Sendepriorität einer weiteren Nachricht eines weiteren, mit dem Übertragungsmedium verbundenen Sende/Empfangsknotens 100 empfangen wird, kann der Sende/Empfangsknoten 100 ausgebildet sein, um die verfügbare Nachricht zu speichern, um die verfügbare Nachricht zu einem späteren zugeordneten Zeitabschnitt dem Übertragungsmedium über die Schnittstelle 102 bereitzustellen. Dies kann erforderlich sein, falls die zu übertragenden Informationen weiterhin relevant sind oder ein weiterer, mit dem Übertragungsmedium verbundener Sende/Empfangsknoten auf diese Informationen angewiesen ist. Alternativ kann der Sende/Empfangsknoten 100 ausgebildet sein, um in diesem Fall die verfügbare Nachricht zu verwerfen. Dies kann der Fall sein, falls die zu übertragenen Informationen zu dem späteren Zeitpunkt nicht mehr aktuell sind oder nicht mehr benötigt werden. Ob eine verfügbare Nachricht gespeichert oder verworfen wird, kann z. B. zum Zeitpunkt der Entwicklung (z. B. des Kraftfahrzeugs) festgelegt werden und hängt in der Regel von der in der Nachricht enthaltenen Information ab. Beispielsweise kann die Nachricht eines Temperatursensors, die einen Temperaturwert aufweist, in der Regel verworfen werden, wobei für den nächsten zugeordneten Zeitabschnitt eine Nachricht mit einem aktualisierten Temperaturwert verfügbar ist. Eine Nachricht zur Einstellung der Sitz- oder Spiegelposition könnte z. B. weiterhin relevant sein, weshalb eine solche Nachricht z. B. zwischengespeichert und zu einem späteren zugeordneten Zeitabschnitt übermittelt wird.

Ferner kann der Sende/Empfangsknoten 100 bei Ausführungsbeispielen ausgebildet sein, um während eines Synchronisierungszeitabschnitts den Zeitplan mit dem zugeordneten Zeitabschnitt und/oder die Sendepriorität der bereit zu stellenden Nachricht mit einer zentralen Steuereinrichtung, die den Zeitplan und die Sendeprioritäten der bereit zu stellenden Nachrichten aufweist, zu synchronisieren. Die Aktualisierung des Zeitplans mit dem zugeordneten Zeitabschnitt und/oder der Sendepriorität kann beispielsweise beim Hochfahren des Sende/Empfangsknotens oder beim Hochfahren des Datenbusses, z. B. nach einem Neustart des Kraftfahrzeugs, erfolgen. Ferner kann der Sende/Empfangknoten ausgebildet sein, um die Aktualisierung selbständig oder auf eine Anforderung hin durchzuführen. Des Weiteren kann der Sende/Empfangsknoten 100 einen Taktgeber und/oder eine Synchronisierungseinrichtung zur Taktsynchronisation mit den weiteren, mit dem Übertragungsmedium verbundenen Sende/Empfangsknoten aufweisen.

Bei Ausführungsbeispielen kann die Schnittstelle 102 des Sende/Empfangsknotens 100 ferner ausgebildet sein, um eine Verbindung mit einem Datenbus herzustellen. Nachfolgend werden daher Ausführungsbeispiele des Sende/Empfangsknotens 100 in einem Bussystem mit einem Datenbus und einer Mehrzahl von Sende/Empfangsknoten 100 beschrieben.

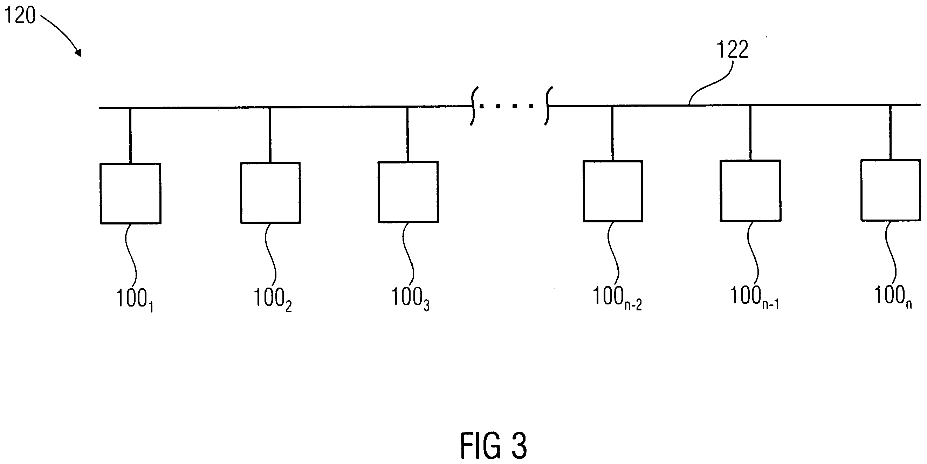

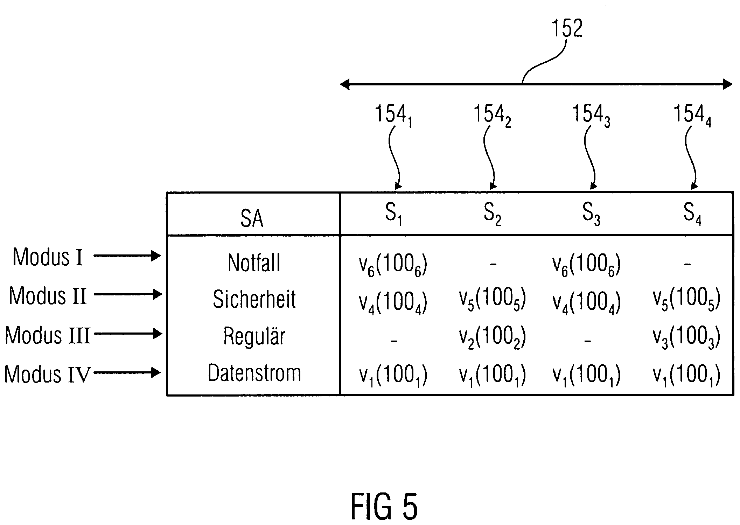

Fig. 3 zeigt ein Bussystem 120 mit einem Datenbus 122 und einer Mehrzahl von Sende/Empfangsknoten $100_1$ bis $100_n$. Das Bussystem 120 erweitert, bei gegebenen Echtzeitanforderungen, den Suchraum zum Auffinden optimaler Zeitpläne (schedules) für Zeitabschnitts- bzw. Zeitschlitz-basierte Datenbusse mit Mehrfachzugriff. Hierzu wird das Konzept der Ausführungsmodi (execution modes, kurz: modes) eingeführt. Ausführungsmodi geben zunächst die Präferenz von Systemfunktionalitäten und darüber dann auch die Sendepriorität von Nachrichten der betreffenden Funktionalität an. In einem Bussystem treten in der Regel Nachrichten höherer Relevanz und Nachrichten niedrigerer Relevanz auf, so z. B. Nachrichten, die die Sicherheit betreffen oder Nachrichten, die einen Audiodatenstrom enthalten. Somit können z. B. die Ausführungsmodi *Notfall, Sicherheit, Regulär* und *Unterhaltung* eingeführt werden. Ausführungsmodi werden nach Präferenzen geordnet und definieren z. B. die Prioritäten von Nachrichten, die diesen Ausführungsmodi zugeordnet sind. Darüber hinaus wird ein optimaler, statischer modusbasierter Zeitplan (mode-based slot schedule) vor Ausführung (offline) ermittelt, so dass die erforderliche Planbarkeit weiterhin gegeben ist und zur Laufzeit (z. B. während der Zeit, die ein Rahmen vom Sender zum Empfänger benötigt) keine zusätzlich zu übertragenden Daten (overhead) entstehen. Beispielsweise bezugnehmend auf das in Fig. 5 gezeigte Ausführungsbeispiel werden vier Modi (modes) verwendet, die Erfindung ist aber nicht auf solche Ausführungsbeispiele beschränkt, sondern vielmehr kann die Anzahl der Modi beliebig sein.

Die Einführung von Ausführungsmodi eröffnet einerseits das Potential zur Verbesserung der Systemstrukturierung, andererseits bilden die Ausführungsmodi die Grundlage für das modusbasierte Zeitplanen. Der modusbasierte Zeitplan bestimmt für jeden Zeitabschnitt (time slot) eine Anzahl potentiell zu sendender bzw. bereit zu stellender Nachrichten, wobei pro Zeitabschnitt höchstens eine Nachricht pro Ausführungsmodus (execution mode) eingeplant wird. Damit weist jeder Zeitabschnitt einen begrenzten Wettbewerb auf, der nach Prioritäten geordnet ist, wodurch eine flexible Nutzung des zugeordneten Zeitabschnitts während der Laufzeit gewährleistet wird. Das Bussystem mit einem Datenbus und einer Mehrzahl von Sende/Empfangsknoten 100 ermöglicht es somit, ein begrenztes, kontrolliertes Ausmaß an dynamischem Wettbewerb für jeden Zeitabschnitt zu ermöglichen. Beim modusbasiertem Zeitplanen kann ein Zeitabschnitt mehreren Sende/Empfangsknoten 100 für die unterschiedlichsten Verwendungszwecke zugeordnet werden. Da dieser Zeitabschnitt bei jedem Auftreten z. B. nur einmal genutzt werden kann, muss sichergestellt werden, dass die Verwendungszwecke nicht widersprüchlich sind. Ein bevorzugter Lösungsansatz kann darin bestehen, Ausführungsmodi zu identifizieren, die sich entweder gegenseitig ausschließen (mutually exclusive) oder die nach Präferenzen geordnet werden können, und den Zeitabschnitt nur einmal pro Ausführungsmodus zuzuordnen. Nachrichten höherer Relevanz, z. B. sicherheitsrelevante Nachrichten, und Nachrichten niedrigerer Relevanz, z. B. ein Audiodatenstrom, können nach Präferenzen geordnet werden und einem Ausführungsmodus zugeordnet werden. Beispielsweise kann zwischen einem Ausführungsmodus *Datenstrom* und einem Ausführungsmodus *Sicherheit* unterschieden werden, wobei sicherheitsrelevante Nachrichten im Ausführungsmodus *Sicherheit* Präferenz vor Unterhaltungsnachrichten bekommen. Anders als bei den zurzeit im Automotive-Bereich eingesetzten Zeitplanungs-Verfahren (Scheduling-Verfahren) kann beim modusbasierten Zeitplanen eine kontrollierte Mehrfachbelegung desselben Zeitabschnitts erfolgen. Dadurch werden die verfügbaren Zeitabschnitte besser genutzt, was zu einer verbesserten Auslastung der Kommunikationsressourcen führt.

Das modusbasierte Zeitplanen ist somit eine globale Zeitplanung für Zeitabschnitte mit Mehrfachzuweisungen in verteilten Kommunikationsumgebungen. Nachfolgend wird zunächst ein abstraktes Kommunikationsmodell definiert, das in einer Vielzahl bereits vorhandener zeitgesteuerter Kommunikationsprotokolle, wie z. B. in FlexRay und TTCAN instanziiert werden kann, wobei folgende Annahme (Def. 1) getroffen werden kann: Ein Single-Hop-Netzwerk (single-hop network) besteht aus einer endlichen Menge $V = \{v_1, ..., v_s\}$ von Sende/Empfangsknoten (nodes) $100_1$ bis $100_n$, die anhand von Verknüpfungen (links) paarweise verbunden sind.

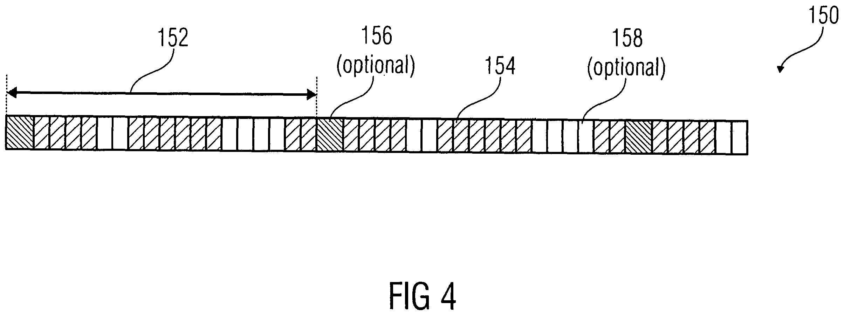

In diesem Zusammenhang zeigt Fig. 4 eine schematische Ansicht einer zeitlichen Strukturierung der Belegung des Übertragungsmediums 150 in Zeitintervallen. Das modusbasierte Zeitplanen beruht auf einem Übertragungsmedium (medium) 150, das in eine Sequenz von Zeitintervallen unterteilt werden kann (TDMA, time division multiple access = Mehrfachzugriff im Zeitmultiplex). Bei Ausführungsbeispielen wird davon ausgegangen, dass das Übertragungsmedium 150 in fortlaufend nummerierte Makrozeitabschnitte (macro slots) 152 gegebener Länge, z. B. gleicher Länge, unterteilt ist, wobei die Makrozeitabschnitte 152 wiederum in nummerierte Mikrozeitabschnitte (micro slots) 154 unterteilt sind. Nachfolgend werden Mikrozeitabschnitte 154 mit Zeitabschnitte 154 bezeichnet, wobei die Zeitabschnitte 154 den Zeitabschnitten 110 der vorherigen Ausführungsbeispiele 1 bis 3 entsprechen können.

Ein Makrozeitabschnitt 152 kann z. B. ferner einem Kommunikationszyklus (communication cycle) bei FlexRay und einem Grundzyklus (basic cycle) bei TTCAN entsprechen. Zuweisungen beziehen sich auf Zeitabschnittsnummern (micro slot numbers) und gelten für das Auftreten des entsprechenden Zeitabschnitts 154 in jedem Makrozeitabschnitt 152. Somit kann folgende Annahme (Def. 2) getroffen werden: Zeit wird in eine kontinuierliche Sequenz von Zeitintervallen

gegebener Länge $S^* = (S_1, S_2, ...)$, die als Makrozeitabschnitte 152 bezeichnet werden, unterteilt. Jeder Makrozeitabschnitt $S$ bzw. 152 wird wiederum in eine endliche Sequenz $S = (s_1, ..., s_n)$ von Zeitabschnitten 154, die eine unterschiedliche Länge aufweisen können, unterteilt. Jeder Zeitabschnitt 154 tritt einmal pro Makrozeitabschnitt 152 auf. Das Auftreten eines Zeitabschnitts $s_j$ (154) im Makrozeitabschnitt $S_i$ (152) wird als $s_{ij}$ bezeichnet.

Die Strukturierung des Übertragungsmediums 150 (medium structuring), die dem modusbasierten Zeitplanen zugrunde liegt, kann als virtuelle Strukturierung angesehen werden, wobei irrelevante Details entfallen, die sonst eine gewisse Bedeutung haben könnten. Beispielsweise kann ein Makrozeitabschnitt 152 zusätzlich ein Synchronisierungsintervall 156 sowie mehrere leere Zeitabschnitte (idle micro slots) 158 aufweisen. In dem in Fig. 4 gezeigten Ausführungsbeispiel stellen lediglich die grau schattierten Bereiche das Auftreten eines für die Übertragung zugeordneten Zeitabschnitts (micro slot occurrences) dar. In Fig. 4 sind beispielhaft n=12 Zeitabschnitte 154 für die Übertragung zugeordnet.

Nachfolgend werden Übertragungsmodi (transmission modes) eingeführt. Übertragungsmodi korrespondieren mit Ausführungsmodi und geben die Präferenz bzw. Priorität von Nachrichten an, wodurch in einem Bussystem Nachrichten nach Relevanz gewichtet werden können. Ferner können Übertragungsmodi z. B. von entsprechenden Systemausführungsmodi (system execution modes) abgeleitet werden. Modi werden einer eindeutigen Moduspräferenz zugeordnet, die die Priorität der entsprechenden Nachrichten bzw. Datenströme bestimmt. Dabei kann folgende Annahme (Def. 3) getroffen werden: Übertragungsmodi (transmission modes) werden als nicht-leere, endliche Menge $M = \{m_1, ..., m_r\}$ modelliert. Jedem Modus (mode) wird eine eindeutige Moduspräferenz $mp: M \rightarrow IN$ (Element der natürlichen Zahlen) zugewiesen, wobei bei Ausführungsbeispielen geringere Werte vereinbarungsgemäß eine höhere Präferenz kennzeichnen. Für die Kennzeichnung der Präferenz können darüber hinaus auch andere Konventionen festgelegt werden.

Für jeden Modus können Zeitabschnitte 154 den Sende/Empfangsknoten $100_1$ bis $100_n$ zugeordnet werden, die diesen Zeitabschnitt 154 nutzen können, um z. B. Rahmen (frames) verfügbarer Nachrichten zu senden bzw. dem Übertragungsmedium 150 über die Schnittstelle 102 bereit zu stellen. Dies bedeutet, dass bei gegebenen $r$ Modi $m_k$, ein Zeitabschnitt 154 bis zu $r$ mal, möglicherweise verschiedenen Sende/Empfangsknoten $100_1$ bis $100_n$, zugeordnet werden kann. Falls der Zeitabschnitt $s_j$ des Modus $m_k$ einem Sende/Empfangsknoten $v$ (100), z.B. dem Sende/Empfangsknoten $100_2$, zugewiesen ist, gilt dies implizit für das Auftreten dieses Zeitabschnitts 154 in allen Makrozeitabschnitten 152. Damit kann folgende Annahme (Def. 4) getroffen werden: $V$ sei ein Single-Hop-Netzwerk, $M$ sei eine Menge von Modi und $S$ sei eine Sequenz von Zeitabschnitten 154. Damit kann eine Teilfunktion, die eine Zuweisung von Zeitabschnitten ($SA$ = slot assignment) definiert, wie folgt angegeben werden:

$$SA: S \times M \rightarrow V$$

Die Zuweisung von Zeitabschnitten ($SA$) kann z. B. statisch bestimmt werden und definiert alle Bandbreitenzuordnungen (bandwidth allocations). Falls $SA$ für ein bestimmtes Paar $(s, m)$ definiert ist, definiert dies eindeutig einen Sende/Empfangsknoten 100, z. B. den Sende/Empfangsknoten $100_2$, dem alle Auftretensfälle des Zeitabschnitts $s$ (154) in dem Modus $m$ zugewiesen sind. Falls $SA$ für ein bestimmtes Paar $(s, m)$ nicht definiert ist, werden die Auftretensfälle des Zeitabschnitts $s$ (154) in dem Modus $m$ nicht verwendet. Die Definition der Zuweisung von Zeitabschnitten ($SA$) präzisiert somit die erste Bedingung, die den Zeitpunkt zum Bereitstellen des Rahmens der verfügbaren Nachricht angibt.

Fig. 5 zeigt ein Ausführungsbeispiel einer Zuweisung von Zeitabschnitten in einer tabellarischen Anordnung für ein vereinfachtes Szenario eines Kraftfahrzeugs. Die Tabelle weist vier Zeitabschnitte $154_1$ bis $154_4$ je Makrozeitabschnitt 152 und vier Modi auf. Modus I: *Notfall* mit der Moduspräferenz eins; Modus II: *Sicherheit* mit der Moduspräferenz zwei; Modus III: *Regulär* mit der Moduspräferenz drei; und Modus IV: *Datenstrom* mit der Moduspräferenz vier. Gemäß dem folgenden Grundprinzip werden die Zeitabschnitte $154_1$ bis $154_4$ sechs verschiedenen Sende/Empfangsknoten $100_1$ bis $100_6$ zugewiesen, wobei zur Veranschaulichung davon ausgegangen wird, dass jeder Sende/Empfangsknoten $100_1$ bis $100_6$ nur Nachrichten eines Typs aufweist. Die Erfindung ist aber nicht auf solche Ausführungsbeispiele beschränkt, sondern vielmehr kann es, falls ein Sende/Empfangsknoten mehrere Nachrichten unterschiedlicher Präferenz aufweist, zunächst zu einem lokalen Wettbewerb kommen.

In dem in Fig. 5 gezeigten Ausführungsbeispiel sendet ein Sende/Empfangsknoten $v_1$ ($100_1$) periodische Unterhaltungsnachrichten, z. B. einen Audiodatenstrom, der die gesamte verfügbare Bandbreite nutzen kann. Deshalb werden dem Sende/Empfangsknoten $v_1$ ($100_1$) im Modus IV *Datenstrom* alle Zeitabschnitte $154_1$ bis $154_4$ zugeordnet. Die Sende/Empfangsknoten $v_2$ ($100_2$) und $v_3$ ($100_3$) senden im Modus III *Regulär,* der Präferenz vor dem Modus IV *Datenstrom* hat, Nachrichten mit sporadischen Ereignissen, die z. B. eine Bewegung der Spiegel und eine Positionierung der Sitze melden. Da diese Ereignisse jedoch selten sind, werden die Zeitabschnitte $154_2$ und $154_4$ üblicherweise nicht von den Sende/Empfangsknoten $v_2$ ($100_2$) und $v_3$ ($100_3$) genutzt. Die Sende/Empfangsknoten $v_4$ ($100_4$) und $v_5$ ($100_5$) senden Nachrichten, die Ereignisse einer drahtgebundenen Lenkung (steer-by-wire) und einer drahtgebundenen Bremse (break-by-wire) aufweisen können, in dem Modus II *Sicherheit* mit einer hohen Präferenz. Der Sende/Empfangsknoten

$v_6$ ($100_6$) signalisiert in dem Modus I *Notfall* Ereignisse eines Airbags. Da diese Ereignisse extrem selten sind, können sie sogar Präferenz vor Ereignissen und somit Nachrichten der drahtgebundenen Lenkung haben. Dabei kann folgende Annahme (Def. 5) getroffen werden: *F* sei eine Menge von Rahmen verfügbarer Nachrichten, d. h. zu sendender Nachrichten, *S** sei eine Sequenz von Makrozeitabschnitten 152, *S* sei eine Sequenz von Zeitabschnitten 154, *M* sei eine Menge von Modi, und *V* sei ein Single-Hop-Netzwerk. Damit kann eine Teilfunktion, die eine Zuweisung von Rahmen (*FA* = frame assignment) definiert, wie folgt angegeben werden:

$$FA: S^* \times S \times M \times V \rightarrow F$$

Die Zuweisung von Rahmen (*FA*) bestimmt, welche Rahmen für welchen Zeitabschnitt 154, Modus und Sende/Empfangsknoten 100 eingeplant (scheduled) sind. In der Praxis wird dies dynamisch entschieden, da die zu sendenden Rahmen verfügbarer Nachrichten in einem nicht bereiten Zustand der Sende/Empfangsknoten $100_1$ bis $100_n$ (offline) nicht bekannt sind. Ein Rahmen einer ereignisgesteuerten Nachricht wird beim modusbasierten Zeitplanen somit nur dann eingeplant, falls das entsprechende Ereignis eintritt und der Sende/Empfangsknoten 100 dementsprechend eine verfügbare Nachricht aufweist. Beispielsweise werden Nachrichten, die Ereignisse der drahtgebundenen Bremse aufweisen, nur dann eingeplant, wenn ein Fahrer ein Bremspedal betätigt. Ferner müssen Rahmen verfügbarer Nachrichten eventuell mehr als einmal eingeplant werden, falls sie mit anderen Rahmen verfügbarer Nachrichten in Wettbewerb stehen, die einem Modus mit einer höheren Präferenz zugeordnet sind. Mit anderen Worten, falls ein Rahmen einer verfügbaren Nachricht für einen vorgegebenen Zeitabschnitt 154 eingeplant ist, bedeutet das nicht, dass dieser Rahmen auch tatsächlich in diesem Zeitabschnitt 154 gesendet wird.

Bei Ausführungsbeispielen muss die Zuweisung eines Rahmens mit der Zuweisung eines Zeitabschnitts im Einklang stehen, d. h. die Zuweisung eines Rahmens muss die Zuweisung eines Zeitabschnitts respektieren, wobei folgende Annahme (Def. 6) getroffen werden kann: *SA* sei die Zuweisung eines Zeitabschnitts, *FA* sei die Zuweisung eines Rahmens. Dann steht *FA* in Einklang mit *SA*, falls:

$$\forall S \in S^*, s \in S, m \in M, v \in V, f \in F. \ (FA(S,s,m,v) = f \Rightarrow SA(s,m) = v).$$

Dabei ist *S* eine Sequenz von Zeitabschnitten 154, *S** eine Sequenz von Makrozeitabschnitten 152, *s* ein Zeitabschnitt 154, *M* eine Menge von Modi, *m* ein Modus, *V* ein Single-Hop-Netzwerk, *v* ein Sende/Empfangsknoten 100, *F* eine Menge von Rahmen verfügbarer Nachrichten und *f* ein Rahmen einer verfügbaren Nachricht. Die Strategie des modusbasierten Zeitplanens präzisiert somit die zweite Bedingung, die angibt, dass die dem Rahmen einer verfügbaren Nachricht zugeordnete Sendepriorität für den zugeordneten Zeitabschnitt höher ist als eine weitere Sendepriorität eines Rahmens einer weiteren verfügbaren Nachricht eines weiteren, mit dem Übertragungsmedium verbundenen Sende/Empfangsknotens.

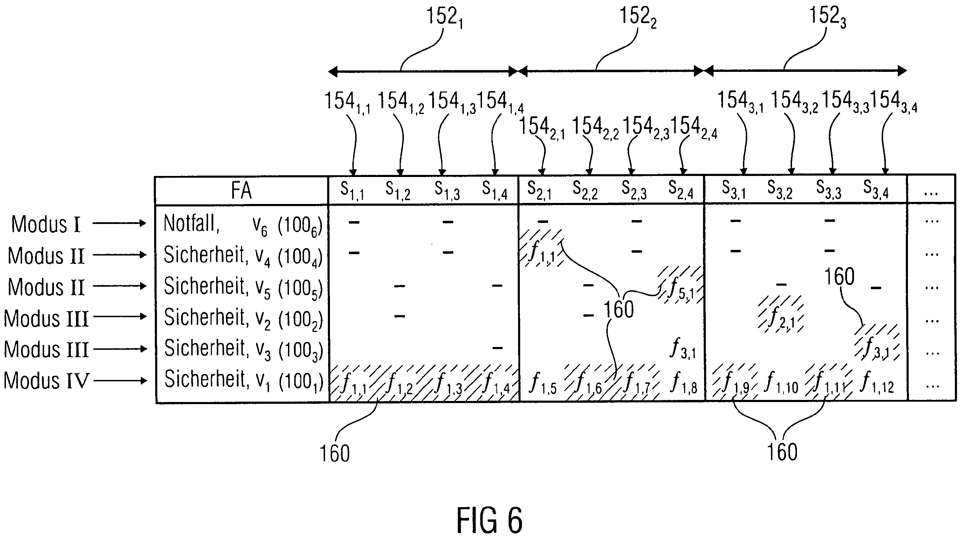

Fig. 6 zeigt ein Ausführungsbeispiel einer Zuweisung von Rahmen, die mit einer Zuweisung von Zeitabschnitten in Einklang steht, in einer tabellarischen Anordnung. Eingeplante Rahmen verfügbarer Nachrichten sind durch einen Eintrag $f_{i,j}$ gekennzeichnet, wobei der erste Index dem Index des Sende/Empfangsknotens $100_1$ bis $100_6$ entspricht und der zweite Index eine fortlaufende Nummerierung ist. In Fig. 6 weisen die Bezugszeichen der Makrozeitabschnitte 152 zeitlich fortlaufend nummerierte Indexe auf, während die Bezugszeichen der Zeitabschnitte 154 durch zwei Indexe gekennzeichnet sind, wobei der erste Index dem Index des zugehörigen Makrozeitabschnitts 152 und der zweite Index eine fortlaufende Nummerierung innerhalb eines Makrozeitabschnitts 152 entspricht. Zuweisungen von Zeitabschnitten 154, die keine eingeplanten Rahmen aufweisen, sind durch einen Eintrag "-" gekennzeichnet. In dem in Fig. 6 gezeigten Ausführungsbeispiel, ist der Sende/Empfangsknoten $v_1$ ($100_1$) bereit, die gesamte mögliche Bandbreite zu nutzen, wohingegen die anderen Sende/Empfangsknoten $100_2$ bis $100_6$ lediglich sporadische Erfordernisse aufweisen.

Das erfindungsgemäße Konzept des modusbasierten Zeitplanens lässt sich somit wie folgt definieren (Def.7): *FA: S** x *S* x *M* x *V* → *F* sei eine Zuweisung von Rahmen, *tx* ⊆ *S** x *S* x *V* x *F* sei eine Beziehung, die definiert, ob ein Rahmen einer verfügbaren Nachricht bei einem Auftreten eines gegebenen Zeitabschnitts 154 seitens eines Sende/Empfangsknoten 100 gesendet wird. Dann ist modusbasiertes Zeitplanen eine Strategie, bei der bei jedem Auftreten eines Zeitabschnitts 154 der eingeplante Rahmen gesendet wird, der die verfügbare Nachricht mit der höchsten Moduspräferenz aufweist. Damit ergibt sich formal folgender Zusammenhang:

$$\forall S \in S^*, s \in S, m \in M, v \in V. \ \exists f \in F. \ (f = FA(S,s,m,v) \ \wedge \ \forall m' \in M, v' \in V, f' \in F. \ (m'$$
$$\neq m \ \wedge \ f' = FA(S,s,m',v') \ \wedge \ mp(m') < mp(m)) \Rightarrow tx(S,s,v,f)).$$

Dabei ist $S$ eine Sequenz von Zeitabschnitten 154, $S^*$ eine Sequenz von Makrozeitabschnitten 152, $s$ ein Zeitabschnitt 154, $M$ eine Menge von Modi, $m$ ein Modus, $m'$ ein weiterer Modus, $V$ ein Single-Hop-Netzwerk, $v$ ein Sende/Empfangsknoten 100, $v'$ ein weiterer Sende/Empfangsknoten 100, $F$ eine Menge von Rahmen verfügbarer Nachrichten, $f$ ein Rahmen einer verfügbaren Nachricht, $f'$ ein weiterer Rahmen einer weiteren verfügbaren Nachricht, $FA$ eine Zuweisung von Rahmen und $mp$ die Moduspräferenz, wobei $tx$ angibt, ob ein Sende/Empfangsknotens 100 einen Rahmen einer verfügbaren Nachricht während des zugeordneten Zeitabschnitts 154 sendet.

Aus den obigen Definitionen folgt, dass bei jedem Auftreten eines Zeitabschnitts 154 höchstens ein Sende/Empfangsknoten 100 senden kann. Den Wettbewerb für den zugeordneten Zeitabschnitt 154 gewinnt immer derjenige Sende/Empfangsknoten 100, der die Nachricht mit der höchsten Sendepriorität bzw. dem Modus höchster Präferenz aufweist. Dabei wird pro Zeitabschnitt höchstens eine Nachricht pro Modus eingeplant, so dass zu einem zugeordneten Zeitabschnitt niemals zwei bzw. mehrere Sende/Empfangsknoten 100 verfügbare Nachrichten mit der gleichen Sendepriorität aufweisen. In dem in Fig. 6 gezeigten Ausführungsbeispiel kann z. B. der Sende/Empfangsknoten $100_4$ im Zeitabschnitt $154_{2,4}$ senden. Ferner kennzeichnen in Fig. 6 die schattierten Einträge 160 die Rahmen, die gemäß dem modusbasierten Zeitplan gesendet werden. Somit ist beim modusbasierten Zeitplanen, für die in Fig. 6 gezeigte Zuweisung von Zeitabschnitten, ein zeitgesteuertes Kommunikationsmedium ausreichend, wohingegen für die Realisierung eines vollkommen deterministischen Zeitplans (schedule), je nach Echtzeitanforderungen, mehr als ein Kommunikationsmedium erforderlich ist.

Ob ein Rahmen einer verfügbaren Nachricht übertragen wird oder nicht, ist eine verteilte Entscheidung, bei der alle Sende/Empfangsknoten $100_1$ bis $100_n$ ausgebildet sind, um basierend auf ihren lokalen Informationen einstimmig zu entscheiden. Falls für einen zugeordneten Zeitabschnitt 154, mehrere Nachrichten untereinander in Wettbewerb stehen, gewinnt die Nachricht, die den höchsten Übertragungsmodus aufweist. Die Rahmen verfügbarer Nachrichten, die den Wettbewerb verlieren, werden entweder neu eingeplant oder verworfen; dies sind jedoch anwendungsspezifische Entscheidungen, die das modusbasierte Zeitplanen nicht betrifft. In dem in Fig. 6 gezeigten Ausführungsbeispiel werden die Rahmen der verfügbaren Nachrichten im Modus IV *Datenstrom,* z. B. die Rahmen $f_{1,5}$ und $f_{1,8}$, verworfen, während der Rahmen der verfügbaren Nachricht im Modus III *Regulär,* z. B. der Rahmen $f_{3,1}$, neu eingeplant wird. Solange im Modus I *Notfall* keine Nachrichten vorhanden sind, gewinnen die Rahmen der verfügbaren Nachrichten im Modus II *Sicherheit* den Wettbewerb; somit ist in diesen Fällen keine neue Einplanung erforderlich. Da es für jeden Zeitabschnitt 154 erforderlich ist, dass der Rahmen gesendet wird, der die Nachricht mit dem Modus mit der höchsten Präferenz aufweist, ist die schnelle Signalisierung des aktuellen Modus eine Grundvoraussetzung für eine effiziente Implementierung des modusbasierten Zeitplanens.

Für eine effiziente Implementierung des oben beschriebenen modusbasierten Zeitplanens wird bei Ausführungsbeispielen der aktuelle Modus mit der höchsten Präferenz schnell und zuverlässig durch das Netzwerk bzw. über den Datenbus verbreitet. Nachfolgend wird dies mit schneller Modussignalisierung (fast mode signaling) bezeichnet. Darüber hinaus kann durch die schnelle Modussignalisierung sichergestellt werden, dass zu Beginn jedes Zeitabschnitts bzw. nach einer sehr kurzen (vernachlässigbaren) Verzögerung der aktuelle Übertragungsmodus allen Sende/Empfangsknoten $100_1$ bis $100_n$ bekannt ist. Die schnelle Modussignalisierung kann, in Abhängigkeit vom Geltungsbereich (scope) der Übertragungsmodi, auf unterschiedliche Weise erfolgen.

Bei einem erfindungsgemäßen Ausführungsbeispiel eines Bussystems mit einem Datenbus und einer Mehrzahl von Sende/Empfangsknoten $100_1$ bis $100_n$ sowie mit modusbasiertem Zeitplanen wird der Geltungsbereich (scope) der Übertragungsmodi auf einzelne (individual) Sende/Empfangsknoten 100 beschränkt. Hierdurch entsteht ein kontrollierbarer Wettbewerb zwischen den Sende/Empfangsknoten 100, wobei jeder Sende/Empfangsknoten 100 für den zugeordneten Zeitabschnitt 154 die Zuweisung von Rahmen bestimmen kann. Wenn also eine nicht-leere Menge von eingeplanten Rahmen verfügbarer Nachrichten vorliegt, dann ist der Modus mit der höchsten Präferenz der lokale Modus, der auf den zugeordneten Zeitabschnitt 154 anzuwenden ist. Zum Senden des Rahmens der verfügbaren Nachricht konkurriert der Sende/Empfangsknoten 100 mit anderen Sende/Empfangsknoten $100_1$ bis $100_n$, indem der Sende/Empfangsknoten 100 den Modus bzw. die Sendepriorität der verfügbaren Nachricht auf eine kollisionsgeschützte Weise signalisiert. Die schnelle Modussignalisierung ermöglicht somit eine busweite, deterministische Signalisierung des aktuellen Modus mit der höchsten Priorität unmittelbar zu Beginn eines Zeitabschnitts und ist damit echtzeitfähig. Dieses Konzept der schnellen Modussignalisierung eignet sich insbesondere für die effiziente Implementierung des modusbasierten Zeitplanens.

Das erfindungsgemäße Konzept der schnellen Modussignalisierung hat gegenüber einem systemweiten bzw. globalen Geltungsbereich der Übertragungsmodi wesentliche Vorteile. Bei einem globalen Geltungsbereich könnten nur die Zeitabschnitte genutzt werden, die dem aktuellen Übertragungsmodus zugeordnet sind. Ferner wäre es erforderlich, den globalen Modus z. B. zu Beginn jedes Makrozeitabschnitts oder zu Beginn jedes Zeitabschnitts zu signalisieren. Hierdurch könnten Rahmen verfügbarerer Nachrichten, die dem aktuell signalisierten Modus zugeordnet sind, sofort und ohne weiteren Wettbewerb gesendet werden. Falls jedoch keine Nachricht den aktuell signalisierten Modus aufweist, kann der Zeitabschnitt nicht genutzt werden, solange der aktuelle Übertragungsmodus besteht. Darüber hinaus stehen globale Übertragungsmodi in Konflikt mit dem modusbasierten Zeitplanen, da eine effiziente Nutzung der verfügbaren Bandbreite nicht mehr sichergestellt wird.

Das erfindungsgemäße Konzept der schnellen Modussignalisierung wird nachfolgend anhand zweier Ausführungsbeispiele für die Implementierung des modusbasierten Zeitplanens in TTCAN und beispielhaft in FlexRay beschrieben. Da das erfindungsgemäße Konzept sehr effizient ist, sind keine zusätzlichen Verwaltungsnachrichten erforderlich.

Das erste Ausführungsbeispiel zeigt eine effiziente Implementierung des modusbasierten Zeitplanens in TTCAN, wobei für ein besseres Verständnis zunächst kurz auf die grundlegende Funktionsweise von CAN und TTCAN eingegangen wird. Beim CAN-Bus wird für die Mediumarbitrierung ein CSMA/CA (CSMA/CA = Carrier Sense Multiple Access with Collision Avoidance = Mehrfachzugriff mit Trägerprüfung und Kollisionsvermeidung) Schema angewendet, das dominante und rezessive Bits verwendet. Eine MAC-Rahmen-Übertragung (MAC = medium access control = Übertragungsmittel Zugriffskontrolle) beginnt mit einem dominanten SOF-bit (start of frame bit = Beginn-des-Rahmens-Bit), gefolgt von einem 11-Bit langen CAN-Nachrichten-Identifizierer (message identifier), der die Priorität bestimmt. Während der bitweisen Arbitrierungssequenz vergleicht ein Knoten das auf dem Übertragungsmedium detektierte Bit mit dem gesendeten Bit. Falls ein rezessives Bit gesendet wurde, jedoch ein dominantes Bit detektiert wird, bedeutet dies, dass ein weiterer Knoten einen Identifizierer mit einer höheren Priorität sendet. Der Knoten mit der niedrigeren Priorität gewährt dem Knoten mit der höheren Priorität Vorrang. Falls mehrere Knoten (fast) gleichzeitig eine MAC-Rahmen-Übertragung starten, gewinnt immer der Knoten den Wettbewerb, der den Rahmen mit der höchsten Priorität sendet, vorausgesetzt, dass der CAN-Nachrichten-Identifizierer eindeutig ist. Beim CAN-Bus ist es jedoch möglich, dass Rahmen mit einer hohen Priorität Rahmen mit einer niedrigeren Priorität auf unbestimmte Zeit verzögern. Der TTCAN-Bus baut auf dem CAN-Bus auf, weist jedoch - im Gegensatz zum CAN-Bus - ein deterministisches Verhalten auf.

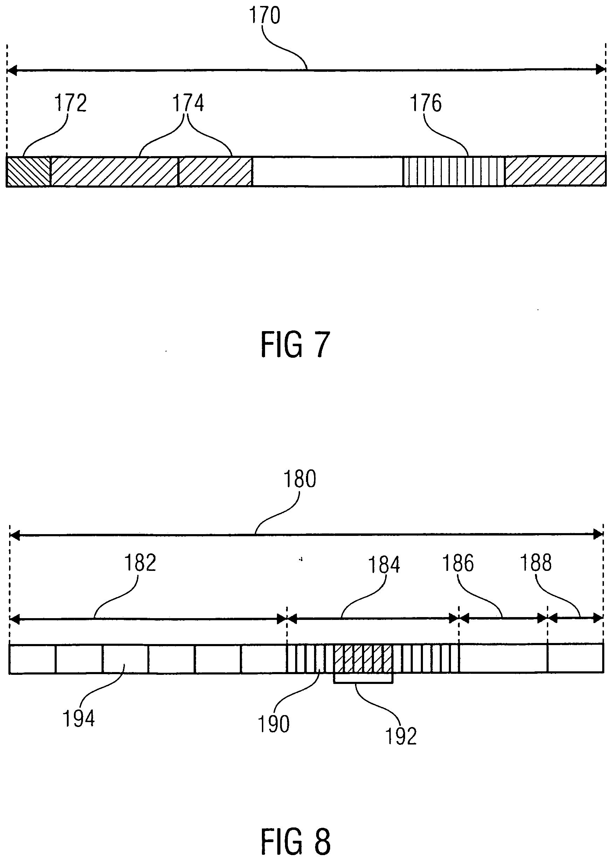

Fig. 7 zeigt die zeitliche Strukturierung der Belegung des Übertragungsmediums bei TTCAN. Bei TTCAN ist die Zeit in Grundzyklen (basic cycles) 170 unterteilt, wobei ein Grundzyklus 170 einem Makrozeitabschnitt 152 entspricht. Zu Beginn jedes Makrozeitabschnitts, relativ zu den Empfangszeiten eines beacon frames (dt. etwa: Funkfeuer-Rahmen), der als Referenznachricht 172 bezeichnet wird, werden Zeitabschnitte, die eine unterschiedliche Länge aufweisen können und als Zeitfenster (time windows) bezeichnet werden, definiert. Zeitfenster sind entweder exklusiv oder arbitrierend. Exklusive Zeitfenster 174 können einer vordefinierten Nachricht eines bestimmten Knotens zugeordnet werden. Falls das System ordnungsgemäß konfiguriert ist, tritt kein Wettbewerb mit anderen Knoten auf. Für arbitrierende Zeitfenster 176 wird das reguläre CAN-Arbitrierungsschema für ereignisgesteuerte Nachrichten genutzt.

TTCAN mit modusbasiertem Zeitplanen, wie dies durch die vorliegende Erfindung gelehrt wird, ist durch die Implementierung der schnellen Modussignalisierung mit den vorhandenen Mechanismen von TTCAN realisierbar. Die schnelle Modussignalisierung kann z. B. implementiert werden, indem in exklusiven Zeitfenstern 174 die reguläre CAN-Arbitrierung genutzt wird, wobei jedem Modus ein CAN-Nachrichtenidentifizierer derart zugeordnet wird, dass Moduspräferenzen respektiert werden. Für die Realisierung des modusbasierten Zeitplans für das in Fig. 5 gezeigte Ausführungsbeispiel können z. B. vier CAN-Nachrichtenidentifizierer verwendet werden. Wenn also mehr als ein Sende/Empfangsknoten 100 versucht, einen Rahmen einer verfügbaren Nachricht in dem zugeordneten Zeitabschnitt 154 zu senden, dann gewinnt den Wettbewerb immer der Rahmen, der die Nachricht mit der höchsten Moduspräferenz aufweist. Da die reguläre CAN-Arbitrierung aktiv bleibt, ist eine Realisierung des Wettbewerbs in exklusiven Zeitfenstern 174 möglich.

Im Vergleich zum regulären CAN-Betrieb, weist der Betrieb von TTCAN mit einem modusbasierten Zeitplan zwei wesentliche Unterschiede auf: Zum Einen ist der Wettbewerb in den exklusiven Zeitfenstern 174 auf eine genau definierte und kontrollierbare Anzahl von Sende/Empfangsknoten 100 beschränkt - pro Modus höchstens ein Sende/Empfangsknoten 100. Falls ein exklusives Zeitfenster 174 lediglich einem Sende/Empfangsknoten 100 und nur einem Modus zugewiesen ist, dann ist die Nutzung des Zeitfensters exklusiv und der Betrieb somit vollkommen deterministisch. Zum Anderen können CAN-Nachrichtenidentifizierer, die einen Modus verschlüsselt enthalten, für verschiedene Nachrichtentypen, die von verschiedenen Sende/Empfangsknoten 100 gesendet werden, verwendet werden, solange diese Nachrichtentypen unterschiedlichen Zeitfenstern zugeordnet sind. Der reguläre CAN-Betrieb würde dadurch gestört, bei der Verwendung von TTCAN mit einem modusbasierten Zeitplan ist dies jedoch nicht der Fall, sofern jeder Modus höchstens einmal pro Zeitfenster genutzt wird. Diese Voraussetzung kann zum Konfigurationszeitpunkt ohne weiteres geprüft werden.

Bei TTCAN mit einem modusbasierten Zeitplan ist es in der Regel nicht erforderlich, alle verfügbaren CAN-Nachrichtenidentifizierer zu nutzen. Falls $n_{Modi}$ die Anzahl von Modi bezeichnet, dann kann die Länge der Arbitrierungsphase auf $\lceil \log_2 n_{Modi} \rceil$ Bits verringert werden. Beispielsweise sind im Fall von 4 Modi 2 Zuteilungsbits und im Fall von 15 Modi 4 Zuteilungsbits ausreichend. Diese Optimierung ist z. B. durch eine Modifikation des TTCAN-Busses realisierbar.

Zum Hervorheben der Unterschiede zwischen TTCAN mit modusbasiertem Zeitplanen und reinem TTCAN, kann das in Fig. 5 gezeigte Ausführungsbeispiel herangezogen werden. Bei der Implementierung des modusbasierten Zeitplanens ist, wie oben beschrieben, eine Lösung mit nur einem TTCAN-Bus realisierbar. Wenn hingegen ausschließlich exklusive Zeitfenster 174 genutzt werden, sind insgesamt drei TTCAN-Busse erforderlich, unter der Annahme, dass unabhängig von der tatsächlichen Menge an Nutzdaten immer ganze Zeitabschnitte verwendet werden.

Ferner werden bei TTCAN mit modusbasiertem Zeitplanen folgende Nachteile gegenüber einer kombinierten Lösung unter Verwendung eines TTCAN-Busses vermieden. Bei einer kombinierten Lösung könnten z.B. exklusive Zeitfenster 174 periodischen Nachrichten mit dem Modus IV *Datenstrom* zugeordnet werden und arbitrierende Zeitfenster 176 sporadischen Nachrichten mit den Modi I bis III *Notfall, Sicherheit* und *Regulär,* wobei geeignete Präferenzen durch die Zuweisung von CAN-Nachrichtenidentifizierer implementiert werden. Um mehr Bandbreite für sporadische Nachrichten zu erhalten, kann z. B. den sporadischen Nachrichten ein Zeitfenster pro Grundzyklus zugeordnet werden, wodurch jedoch die Bandbreite für periodische Nachrichten verringert wird. Die kombinierte Lösung führt zu folgenden Problemen: Notfallnachrichten konkurrieren mit Sicherheitsnachrichten, die wiederum mit regulären Nachrichten in den selben Zeitfenstern konkurrieren, wodurch diese auf unbestimmte Zeit verzögert werden können. Darüber hinaus ist es erforderlich, für unterschiedliche Nachrichtentypen, die den gleichen Modus aufweisen, jedoch von unterschiedlichen Sende/Empfangsknoten 100 stammen, z.B. die von drahtgebundenen (by-wire) Sytemen wie z. B. von einer drahtgebundenen Lenkung und einer drahtgebundenen Bremse stammen, eindeutige (unique) CAN-Nachrichtenidentifizierer zu verwenden - einen CAN-Nachrichtenidentifizierer pro Nachrichtentyp. Dies kann jedoch dazu führen, dass Nachrichten eines Typs, z. B. Nachrichten der drahtgebundenen Lenkung, Nachrichten eines anderen Typs, z. B. Nachrichten der drahtgebundenen Bremse, verzögern. Dies ist insbesondere bei drahtgebundenen Systemen inakzeptabel.

Als ein weiteres Ausführungsbeispiel soll das erfindungsgemäße Konzept der schnellen Modussignalisierung beispielhaft für die Implementierung des modusbasierten Zeitplanens in FlexRay, insbesondere für ein vom FlexRay-Protokoll abgeleitetes bzw. weiterentwickeltes Protokoll, nachfolgend mit FlexRay bezeichnet, beschrieben werden. Für ein besseres Verständnis der Implementierung wird zunächst die grundlegende Funktionsweise von FlexRay beschrieben.

Fig. 8 zeigt die zeitliche Strukturierung der Belegung des Übertragungsmediums bei FlexRay. Zeit ist in Makrozeitabschnitte unterteilt, die als Kommunikationszyklen 180 bezeichnet werden. Ein Kommunikationszyklus 180 weist vier statisch konfigurierbare Segmente auf. Ein statisches Segment 182, ein dynamisches Segment 184, ein optionales Symbolfenster 186 und eine Netzwerk-Leerlaufzeit (*Network Idle Time, NIT*) 188. Das statische Segment 182 weist eine Mehrzahl statischer Zeitschlitze auf, die einem Knoten für einen deterministischen Zugriff exklusiv zugeordnet werden können. Das dynamische Segment 184 ist in Minizeitschlitze (mini slots) 190 unterteilt, denen Rahmen entsprechend ihrer Anzahl zugeordnet werden können. Die Übertragung eines Rahmens mit dem Identifizierer *k* beginnt in dem *k*-ten freien Minizeitschlitz 190 des dynamischen Segments 184, falls der nachfolgende Abschnitt des dynamischen Segments 184 lang genug ist, um die Übertragung abzuschließen. Für die Übertragung werden mehrere Minizeitschlitze 190 zu einem dynamischen Zeitschlitz 192 zusammengefasst. Während dieser Zeit wird das Zählen von freien Minizeitschlitzen 190 ausgesetzt. Dieses Schema verleiht Rahmen mit geringeren Identifizierern Präferenz, garantiert jedoch nicht, dass alle sporadischen Rahmen, die in einem dynamischen Segment 184 konkurrieren, gesendet werden können. Das optionale Symbolfenster (symbol window) 186 wird für Netzwerkverwaltungszwecke verwendet. Symbole werden in FlexRay als Niedrigpulsphasen (low pulse phases) mit einer definierten Länge verschlüsselt (encoded). Zum Schutz vor Verzerrungen, wird nur die Länge der Niedrigpulsphase ausgewertet. Zusammen mit (rezessiven) Leerlaufphasen können Symbole zum binären Verschlüsseln verwendet werden. Die obligatorische Netzwerk-Leerlaufzeit 188 wird zur Korrektur von Taktabweichungen (clock offset) und damit verbundene interne Berechnungen verwendet. Darüber hinaus werden bei FlexRay mehrere Grundzyklen 180 zu einem Matrixzyklus (matrix cycle) zusammengefasst.

FlexRay mit modusbasiertem Zeitplanen, wie dies durch die vorliegende Erfindung gelehrt wird, ist durch die Implementierung der schnellen Modussignalisierung mit den vorhandenen Mechanismen von FlexRay realisierbar. Für die Implementierung können z. B. Zeitschlitze 194 des statischen Segments 182 in Minizeitschlitze zerlegt werden, wobei jeder Minizeitschlitz einem Übertragungsmodus zugeordnet wird, so dass Moduspräferenzen respektiert werden. Um einen Rahmen einer verfügbaren Nachricht zu senden, hört der Sende/Empfangsknoten 100 von Beginn des statischen Segments 182 an das Übertragungsmedium ab. Falls das Übertragungsmedium bis zum Zeitpunkt vor dem Auftreten des Minizeitschlitzes, das dem Modus der verfügbaren Nachricht zugeordnet ist, frei bleibt, dann hat der Sende/Empfangsknoten 100 den Wettbewerb gewonnen und kann den Rahmen der verfügbaren Nachricht übertragen.

Ein Vorteil dieser Lösung besteht darin, dass z. B. existierende FlexRay-Adapter verwendet werden können, um die schnelle Modussignalisierung zu implementieren. Mit zunehmender Anzahl an Modi tendiert diese Lösung jedoch dazu ineffizient zu werden, da jeder Modus pro Zeitschlitz 194 einen Minizeitschlitz erfordert. Zur Verbesserung der Situation kann z. B. die Anzahl an Modi beschränkt werden. Wenn die Anzahl an Modi nicht beschränkt werden kann, dann kann z. B. für jeden Zeitschlitz 194 eine Zuweisung von Zeitabschnitten mit einer geringeren Anzahl von Modi verwendet werden. Hierzu wird jedem Minizeitschlitz ein Übertragungsmodus auf einer Pro-Statischer-Zeitschlitz-Basis (on a per static slot basis) zugeordnet, wobei Moduspräferenzen respektiert werden. Dies bedeutet, dass der gleiche Modus verschiedenen Minizeitschlitzen in verschiedenen Zeitschlitzen 194 zugeordnet ist. Alternativ können Moduspräferenzen binär verschlüsselt werden und als Sequenz (dominanter) FlexRay-Symbole und (rezessiver) Leerlaufphasen zu Beginn der Zeitschlitze 194 übermittelt werden. Dies führt zu einem aktiven Wettbewerb zwischen den Sende/Empfangsknoten 100, die den selben Zeitschlitz 194 zum Senden eines Rahmens einer verfügbaren Nachricht nutzen wollen - vergleichbar zum Schema bei der CAN-Arbitrierung.

Zum Hervorheben der Unterschiede zwischen FlexRay mit modusbasiertem Zeitplanen und reinem FlexRay, kann das in Fig. 5 gezeigte Ausführungsbeispiel herangezogen werden. Bei der Implementierung des modusbasierten Zeitplanens ist, wie oben beschrieben, eine Lösung mit nur einem FlexRay-Bus realisierbar. Wenn hingegen ausschließlich statische Zeitschlitze 194 genutzt werden, sind drei FlexRay-Busse erforderlich, unter der Annahme, dass FlexRay einen Bus zur Zeit arbitriert.

Ferner werden bei FlexRay mit modusbasiertem Zeitplanen folgende Nachteile gegenüber einer kombinierten Lösung unter Verwendung eines FlexRay-Busses vermieden. Bei einer kombinierten Lösung könnten z. B. statische Zeitschlitze 194 periodischen Nachrichten mit dem Modus IV *Datenstrom* zugeordnet werden und dynamische Zeitschlitze sporadischen Nachrichten mit den Modi I bis III *Notfall, Sicherheit* und *Regulär,* mit geeignet zugeordneten Präferenzen. Die kombinierte Lösung erfordert jedoch, dass der Kommunikationszyklus um ein dynamisches Segment 184 erweitert wird, wodurch die verfügbare Bandbreite für periodische Nachrichten reduziert wird. Darüber hinaus führt die kombinierte Lösung dazu, dass sporadische Nachrichten mit einer hohen Präferenz weitere ereignisgesteuerte Nachrichten niedrigerer Präferenz auf unbestimmte Zeit verzögern könnten.

Für die Einhaltung der Echtzeitgarantien für das in Fig. 5 gezeigte Ausführungsbeispiel ist somit eine Lösung, die auf einem FlexRay-Bus bzw. TTCAN-Bus mit modusbasiertem Zeitplanen und einer schnellen Modussignalisierung basiert, realisierbar, eine Lösung, die auf einem reinen FlexRay-Bus bzw. TTCAN-Bus basiert, hingegen nicht. Modusbasiertes Zeitplanen in Verbindung mit einer schnellen Modussignalisierung ermöglicht somit eine deutlich effektivere Nutzung der verfügbaren Bandbreite von TDMA-Netzwerken in Realzeitszenarien (real-time scenarios). Dies ist insbesondere im Automotive-Bereich von Interesse, da hier eine Tendenz zu zeitgesteuerten Protokollen erkennbar ist. Das Bussystem mit einem Datenbus und einer Mehrzahl von Sende/Empfangknoten 100 kann somit genutzt werden, um die Mehrzahl von Sende/Empfangsknoten in Form von Sensoren, Steuergeräten, Eingabegeräten und/oder Ausgabegeräten in Kraftfahrzeugen untereinander zu vernetzen.

Bei Ausführungsbeispielen wird der modusbasierte Zeitplan durch die schnelle Modussignalisierung auf einem drahtgebundenen, zeitgesteuerten Datenbus mit Mehrfachzugriff realisiert. Die Prioritäten der Modi werden bei der Mediumarbitrierung in der Form umgesetzt, dass nach der (sehr kurzen) Arbitrierungsphase nur ein Sende/Empfangsknoten 100 sendet. Auf diese Weise können bei gegebenem Anforderungsprofil Echtzeitgarantien gegeben werden, soweit dies erforderlich ist. Ausführungsbeispiele ermöglichen ferner eine verbesserte Auslastbarkeit drahtgebundener Datenbusse im Echtzeitbetrieb. Das erfindungsgemäße Konzept der Ausführungsmodi, des modusbasierten Zeitplanens und der schnellen Modussignalisierung ermöglicht somit eine echtzeitfähige Lösung für drahtgebundene, zeitgesteuerte Datenbusse mit Mehrfachzugriff. Hierzu wird ein statischer Zeitplan, ein kontrollierter Wettbewerb pro Zeitabschnitt sowie eine sehr schnelle dynamische Signalisierung des aktuellen Modus mit der höchsten Präferenz genutzt.

Darüber hinaus sind Ausführungsbeispiele der Erfindung mit den aktuellen Zeitplanungstechnologien der Automobilindustrie, die lediglich einen rein exklusiven oder einen rein arbitrierenden Zugriff auf ein Übertragungsmedium ermöglichen, vollständig kompatibel. Ferner können die verwendeten Zeitplanungstechniken der Automobilindustrie durch Spezialfälle des modusbasierten Zeitplanens abgedeckt werden, z. B. durch eine exklusive Zuordnung eines Zeitabschnitts zu einem bestimmten Sende/Empfangsknoten 100. Aus diesem Grund können die vorhandenen Kommunikationssysteme als Ausgangspunkt für die Implementierung des modusbasierten Zeitplanens verwendet werden, indem ein kontrollierter Wettbewerb in einer geeigneten Teilmenge exklusiver Zeitabschnitte realisiert wird. Das erfindungsgemäße Konzept führt somit zu einer deutlich höheren Auslastung von Bussystemen, ohne Verlust der Echtzeitfähigkeit. Dadurch ist es je nach Anwendungsgebiet möglich, z. B. die Anzahl der erforderlichen Bussysteme zu reduzieren bzw. mit weniger Bussystemen auszukommen. Anhand der Ausführungsbeispiele wurde gezeigt, dass die Voraussetzungen für die Umsetzung der vorliegenden Erfindung bereits gegeben sind, da modusbasiertes Zeitplanen an keine technologischen Voraussetzungen geknüpft ist. Darüber hinaus ist modusbasiertes Zeitplanen verträglich (compliant) mit derzeit üblichen Zeitplanungsverfahren.

Ausführungsbeispiele der Erfindung wurden beschrieben, bei denen der Sende/Empfangsknoten 100 ausgebildet ist, um die Sendepriorität der verfügbaren Nachricht dem Übertragungsmedium zu dem zugeordneten Zeitabschnitt bereitzustellen und um eine weitere Sendepriorität einer weiteren Nachricht eines weiteren, mit dem Übertragungsmedium verbundenen Sende/Empfangsknotens zu empfangen. Darüber hinaus kann z. B. der Sende/Empfangsknoten 100, der die Nachricht mit der höchsten Sendepriorität aufweist, ausgebildet sein, um die Sendepriorität der Nachricht zu dem zugeordneten Zeitabschnitt zu signalisieren, den Rahmen der verfügbaren Nachricht jedoch sofort zu senden, ohne eine weitere Sendepriorität zu empfangen und diese mit der eigenen zu vergleichen. Dies ist möglich, da der Sende/Empfangsknoten 100, der die Nachricht mit der höchsten Priorität aufweist, den Wettbewerb für den zugeordneten Zeitabschnitt immer gewinnt. Ferner kann der Sende/Empfangsknoten, der die Nachricht mit der niedrigsten Sendepriorität aufweist, z. B. ausgebildet sein, um den Rahmen der verfügbaren Nachricht zu dem zugeordneten Zeitabschnitt dem Übertragungsmedium über die Schnittstelle bereit zu stellen, falls keine weitere Sendepriorität empfangbar ist ohne die Sendepriorität der verfügbaren Nachricht zu signalisieren. Dies ist möglich, da der Sende/Empfangsknoten 100, der die Nachricht mit der niedrigsten Sendepriorität aufweist, den Wettbewerb für den zugeordneten Zeitabschnitt immer verliert.

Des Weiteren wurden Ausführungsbeispiele beschrieben, bei denen das erfindungsgemäße Konzept der schnellen Modussignalisierung für die Implementierung des modusbasierten Zeitplanens bei TTCAN und beispielhaft bei FlexRay genutzt wurde. Die Erfindung ist aber nicht auf solche Ausführungsbeispiele beschränkt, sondern vielmehr kann die schnelle Modussignalisierung für die Implementierung des modusbasierten Zeitplanens z. B. bei CAN, LIN, MOST und D2B, bei denen durch die Standards ISO 10681, ISO 11898, ISO 11992, ISO 11783, SAE J2284 und SAE J1939 definierten Kommunikationstechnologien sowie bei anderen Technologien genutzt werden.

Ferner wurden Ausführungsbeispiele der Erfindung beschrieben, bei denen das erfindungsgemäße Konzept der schnellen Modussignalisierung für die Implementierung des modusbasierten Zeitplanens bei Kommunikationstechnologien von Kraftfahrzeugen genutzt wurde. Die Erfindung ist aber nicht auf solche Ausführungsbeispiele beschränkt, sondern vielmehr kann das erfindungsgemäße Konzept der schnellen Modussignalisierung ebenfalls für die Implementierung des modusbasierten Zeitplanens bei Kommunikationstechnologien und bei entsprechenden Protokollen und Standards von Flugzeugen genutzt werden, z. B. für die Implementierung des modusbasierten Zeitplanens bei TTP (Time-Triggered Protocol), ARINC 629 und ARINC 825 (ARINC = Aeronautical Radio Incorporated).

Ferner wurden Ausführungsbeispiele beschrieben, in denen eine Mehrzahl von Sende/Empfangsknoten 100 in einem Single-Hop-Netzwerk vernetzt wurden. Die Erfindung ist aber nicht auf solche Ausführungsbeispiele beschränkt, sondern vielmehr können mehrere Bussysteme mit einem Datenbus und einer Mehrzahl von Sende/Empfangsknoten 100 über Netzübergangsknoten (gateway nodes) zu einem Multi-Hop-Netzwerk (multi-hop network) zusammengefasst werden, wobei Adressierungsschemata und Routingprotokolle einer höheren Ebene erforderlich sind. Um bei Multi-Hop-Netzwerken ein deterministisches Verhalten sicherzustellen, können z. B. Zeitabschnitte in den unterschiedlichen Bussystemen derart angeordnet werden, dass Nachrichten, die von einem Netzübergangsknoten empfangen werden, zeitnah während des nächsten Sprunges (hop) weitergeleitet werden. Das Prinzip zum Auffinden geeigneter modusbasierter Zeitpläne für Multi-Hop-Netzwerke ist das gleiche wie beim modusbasierten Zeitplanen für Single-Hop-Netzwerke. Das erfindungsgemäße Konzept der schnellen Modussignalisierung ist ebenfalls für drahtgebundene Multi-Hop-Netzwerke anwendbar.

Weitere Ausführungsbeispiele der vorliegenden Erfindung schaffen einen Sende/Empfangsknoten 100 mit einer Schnittstelle 102 zum Herstellen einer Verbindung mit einem Übertragungsmedium, wobei der Sende/Empfangsknoten 100 ausgebildet ist, um bei einer Abfolge von Zeitabschnitten das Auftreten einer ersten Bedingung und einer zweiten Bedingung zu erfassen und, falls die erste und die zweite Bedingung für einen zugeordneten Zeitabschnitt erfüllt sind, um dem Übertragungsmedium während des zugeordneten Zeitabschnitts einen Rahmen einer verfügbaren Nachricht über die Schnittstelle 102 bereitzustellen, wobei die erste Bedingung gemäß einem Zeitplan den zugeordneten Zeitabschnitt zum Bereitstellen des Rahmens der verfügbaren Nachricht angibt, und wobei die zweite Bedingung angibt, dass die der Nachricht zugeordnete Sendepriorität für den zugeordneten Zeitabschnitt höher ist als eine weitere Sendepriorität einer weiteren verfügbaren Nachricht eines weiteren, mit dem Übertragungsmedium verbundenen Sende/Empfangsknotens, wobei das Auftreten der ersten und zweiten Bedingung derart in Form einer Matrix darstellbar ist, dass eine erste Dimension der Matrix die Zeitabschnitte des Zeitplans zum Bereitstellen der Rahmen aufweist und eine zweite Dimension der Matrix die vorgegebenen Sendeprioritäten der Nachrichten aufweist, wobei in der ersten Dimension der Matrix Nachrichten gleicher Sendepriorität vorhanden sind, und wobei die in der zweiten Dimension der Matrix auftretenden vorgegebenen Sendeprioritäten der Nachrichten unterschiedlich sind.

Ferner kann der dem Sende/Empfangsknoten 100 zugeordnete Zeitabschnitt 110 in Unterabschnitte unterteilt sein, wobei der Sende/Empfangsknoten 100 ausgebildet ist, um in einem ersten Unterabschnitt 112 die Sendepriorität der verfügbaren Nachricht oder die davon abgeleiteten Information dem Übertragungsmedium über die Schnittstelle 102 bereitzustellen und um in einem weiteren Unterabschnitt 114 den Rahmen der verfügbaren Nachricht über die Schnittstelle 102 dem Übertragungsmedium bereitzustellen. Dabei kann der Sende/Empfangsknoten 100 ausgebildet sein, um den Vergleich während des ersten Unterabschnitts 112 des zugeordneten Zeitabschnitts 110 durchzuführen.

Ferner kann der Sende/Empfangsknoten 100 einen Speicher 104 zum Ablegen des Zeitplans mit den zugeordneten Zeitabschnitten oder der Sendepriorität der bereitzustellenden Nachricht aufweisen. Dabei kann der im Speicher 104 abgelegte Zeitplan mit den zugeordneten Zeitabschnitten oder den Sendeprioritäten aktualisierbar sein. Der Sende/Empfangsknoten kann dabei ausgebildet sein, um während eines Synchronisierungszeitabschnitts den Zeitplan mit den zugeordneten Zeitabschnitten oder die Sendepriorität mit einer zentralen Steuereinrichtung, die den Zeitplan und die Sendeprioritäten der Nachrichten aufweist, zu synchronisieren.

Weitere Ausführungsbeispiele der vorliegenden Erfindung schaffen ein Bussystem 120 mit einem Datenbus 122 und einer Mehrzahl der oben dargestellten Sende/Empfangsknoten 100. Dabei kann der der Datenbus 122 als ein Datenbus mit Mehrfachzugriff im Echtzeitbetrieb ausgebildet sein, wobei der Datenbus ferner ausgebildet sein kann, um die Mehrzahl von Sende/Empfangsknoten in Form von Sensoren, Steuergeräten, Eingabegeräten und/oder Ausgabegeräten in Kraftfahrzeugen oder Flugzeugen untereinander zu vernetzen. Des Weiteren kann das Auftreten der ersten und zweiten Bedingung in Form einer Matrix darstellbar sein, wobei eine erste Dimension der Matrix die Zeitabschnitte des Zeitplans zum Bereitstellen der Rahmen aufweist und eine zweite Dimension der Matrix die vorgegebenen Sendeprioritäten der Nachrichten aufweist, und wobei die in der zweiten Dimension der Matrix auftretenden vorgegebenen Sendeprioritäten unterschiedlich sind.

Weitere Ausführungsbeispiele der vorliegenden Erfindung beziehen sich auf die Verwendung einer Mehrzahl der oben dargestellten Sende/Empfangsknoten, in einem Bussystem mit einem Datenbus mit Mehrfachzugriff im Echtzeitbetrieb, wobei der Datenbus als ein Protokoll gemäß CAN, TTCAN, FlexRay, LIN, MOST, D2B oder TTP, oder einem Standart gemäß ARINC 629 oder ARINC 825 ausgebildet ist.

## Patentansprüche

1.   Sende/Empfangsknoten (100) mit einer Schnittstelle (102) zum Herstellen einer Verbindung mit einem Übertragungsmedium, wobei der Sende/Empfangsknoten (100) ausgebildet ist, um bei einer Abfolge von Zeitabschnitten das Auftreten einer ersten Bedingung und einer zweiten Bedingung zu erfassen und, falls die erste und die zweite Bedingung für einen einer verfügbaren Nachricht zugeordneten Zeitabschnitt erfüllt sind, um dem Übertragungsmedium während des zugeordneten Zeitabschnitts einen Rahmen der verfügbaren Nachricht über die Schnittstelle (102) zu übertragen, wobei die erste Bedingung gemäß einem Zeitplan den zugeordneten Zeitabschnitt zum Bereitstellen des Rahmens der verfügbaren Nachricht angibt, und wobei die zweite Bedingung angibt, dass die der verfügbaren Nachricht zugeordnete Sendepriorität für den zugeordneten Zeitabschnitt die höchste Sendepriorität unter den Sendeprioritäten der verfügbaren Nachrichten der mit dem Übertragungsmedium verbundenen Sende/Empfangsknoten (100) für denselben zugeordneten Zeitabschnitt (110) ist
     wobei die erste und zweite Bedingung über einen Zeitplan vorgegeben sind, der vor Ausführung ermittelt wird;
     wobei der Zeitplan ein modusbasierter Zeitplan ist, der für jeden Zeitabschnitt eine Anzahl potentiell bereit zu stellender Nachrichten bestimmt, wobei pro Zeitabschnitt höchstens eine Nachricht pro Ausführungsmodus eingeplant wird, so dass jeder Zeitabschnitt einen begrenzten Wettbewerb aufweist, der nach Prioritäten geordnet ist;
     wobei Ausführungsmodi nach Präferenzen geordnet sind und die Sendeprioritäten von Nachrichten definieren, die diesen Ausführungsmodi zugeordnet sind; und
     wobei ein Zeitabschnitt mehreren Sende/Empfangsknoten für unterschiedliche Ausführungsmodi zugeordnet wird wobei dieser Zeitabschnitt bei jedem Auftreten nur einmal pro Ausführungsmodus zugeordnet ist wobei oben schon definiert ist, dass Ausführungsmodi nach Präferenzen geordnet sind.

2.   Sende/Empfangsknoten (100) nach Anspruch 1, wobei der Sende/Empfangsknoten (100) ausgebildet ist, falls die erste Bedingung erfüllt ist und der Sende/Empfangsknoten (100) eine verfügbare Nachricht aufweist, um die Sendepriorität der verfügbaren Nachricht oder eine davon abgeleitete Information dem Übertragungsmedium über die Schnittstelle (102) bereitzustellen.

3.   Sende/Empfangsknoten (100) nach Anspruch 1 oder 2, wobei der Sende/Empfangsknoten (100) ausgebildet ist, falls die erste Bedingung erfüllt ist und der Sende/Empfangsknoten (100) mehrere verfügbare Nachrichten unterschiedlicher Sendepriorität aufweist, um die verfügbare Nachricht mit der höchsten Sendepriorität zu ermitteln, und um die ermittelte höchste Sendepriorität oder eine davon abgeleitete Information dem Übertragungsmedium über die Schnittstelle (102) bereitzustellen.

4.   Sende/Empfangsknoten (100) nach einem der Ansprüche 1 bis 3, der ausgebildet ist, um die weitere Sendepriorität oder die davon abgeleitete Information über die Schnittstelle (102) zu empfangen, und um die weitere empfangene Sendepriorität oder die davon abgeleitete Information mit der Sendepriorität der eigenen verfügbaren Nachricht oder einer davon abgeleiteten Information zu vergleichen, um zu erfassen, ob die zweite Bedingung erfüllt ist.

5.   Sende/Empfangsknoten (100) nach einem der Ansprüche 1 bis 4, wobei die zweite Bedingung ferner erfüllt ist, wenn der Sende/Empfangsknoten (100) zu dem vorgegebenen Zeitabschnitt über die Schnittstelle (102) vom Übertragungsmedium keine weitere Sendepriorität empfängt.

6.   Sende/Empfangsknoten (100) nach einem der Ansprüche 1 bis 5, wobei der dem Sende/Empfangsknoten (100) zugeordnete Zeitabschnitt (110) in Unterabschnitte unterteilt ist, wobei der Sende/Empfangsknoten (100) ausgebildet ist, um in einem ersten Unterabschnitt (112) die Sendepriorität der verfügbaren Nachricht oder die davon abgeleiteten Information dem Übertragungsmedium über die Schnittstelle (102) bereitzustellen und um in einem weiteren Unterabschnitt (114) den Rahmen der verfügbaren Nachricht über die Schnittstelle (102) dem Übertragungsmedium bereitzustellen.

7.   Sende/Empfangsknoten (100) nach einem der Ansprüche 1 bis 6, der ausgebildet ist, um die verfügbare Nachricht zu speichern, falls nur die erste Bedingung erfüllt ist, um die verfügbare Nachricht zu einem späteren zugeordneten Zeitabschnitt dem Übertragungsmedium bereitzustellen.

8. Sende/Empfangsknoten (100) nach einem der Ansprüche 1 bis 8, der ausgebildet ist, um die verfügbare Nachricht zu verwerfen, falls nur die erste Bedingung erfüllt ist.

9. Sende/Empfangsknoten (100) nach einem der Ansprüche 1 bis 8, wobei der Sende/Empfangsknoten (100) einen Speicher (104) zum Ablegen des Zeitplans mit den zugeordneten Zeitabschnitten oder der Sendepriorität der bereitzustellenden Nachricht aufweist.

10. Sende/Empfangsknoten (100) nach einem der Ansprüche 1 bis 9, der einen Taktgeber und/oder eine Synchronisationseinrichtung zur Taktsynchronisation mit den weiteren Sende/Empfangsknoten aufweist.

11. Sende/Empfangsknoten (100) nach einem der Ansprüche 1 bis 10, wobei die Schnittstelle (102) ausgebildet ist, um mit einem Datenbus mit Mehrfachzugriff im Echtzeitbetrieb zu kommunizieren.

12. Sende/Empfangsknoten (100) nach einem der Ansprüche 1 bis 11, wobei die Nachrichten die verfügbare Nachricht und die weitere verfügbare Nachricht aufweisen.

13. Bussystem (120) mit einem Datenbus (122) und einer Mehrzahl von Sende/Empfangsknoten (100) nach einem der Ansprüche 1 bis 12.

14. Verfahren zum Betreiben eines Sende/Empfangsknotens, der eine Schnittstelle zum Herstellen einer Verbindung mit einem Übertragungsmedium aufweist, mit folgenden Merkmalen:

Erfassen des Auftretens einer ersten Bedingung und einer zweiten Bedingung für einen einer verfügbaren Nachricht zugeordneten Zeitabschnitt einer Abfolge von Zeitabschnitten; und
Übertragen eines Rahmens der verfügbaren Nachricht dem Übertragungsmedium während des zugeordneten Zeitabschnitts über die Schnittstelle, falls die erste und die zweite Bedingung für den zugeordneten Zeitabschnitt erfüllt sind,
wobei die erste Bedingung gemäß einem Zeitplan den zugeordneten Zeitabschnitt zum Bereitstellen des Rahmens der verfügbaren Nachricht angibt, und wobei die zweite Bedingung angibt, dass die der verfügbaren Nachricht zugeordnete Sende-priorität für den zugeordneten Zeitabschnittdie höchste Sendepriorität unter den Sendeprioritäten der verfügbaren Nachrichten der mit dem Übertragungsmedium verbundenen Sende/Empfangsknoten für denselben zugeordneten Zeitabschnitt ist;
wobei die erste und zweite Bedingung über einen Zeitplan vorgegeben sind, der vor Ausführung ermittelt wird;
wobei der Zeitplan ein modusbasierter Zeitplan ist, der für jeden Zeitabschnitt eine Anzahl potentiell bereit zu stellender Nachrichten bestimmt, wobei pro Zeitabschnitt höchstens eine Nachricht pro Ausführungsmodus eingeplant wird, so dass jeder Zeitabschnitt einen begrenzten Wettbewerb aufweist, der nach Prioritäten geordnet ist;
wobei Ausführungsmodi nach Präferenzen geordnet sind und die Sendeprioritäten von Nachrichten definieren, die diesen Ausführungsmodi zugeordnet sind; und
wobei ein Zeitabschnitt mehreren Sende/Empfangsknoten für unterschiedliche Ausführungsmodi zugeordnet wird, wobei dieser Zeitabschnitt bei jedem Auftreten nur einmal pro Ausführungsmodus zugeordnet ist.

15. Computerprogramm zur Durchführung des Verfahrens gemäß Anspruch 14, wenn das Computerprogramm auf einem Computer oder einem Mikroprozessor abläuft.

**Claims**

1. Transmission/reception node (100) having an interface (102) for setting up a connection to a transmission medium, wherein the transmission/reception node (100) is configured to detect, in a sequence of temporal portions, the occurrence of a first condition and a second condition and, if the first and the second conditions are satisfied for a temporal portion associated to an available message, to transmit to the transmission medium a frame of the available message during the associated temporal portion via the interface (102), wherein the first condition indicates according to a schedule the associated temporal portion for providing the frame of the available message, and wherein the second condition indicates that the transmission priority associated to the available message is for the associated temporal portion the highest transmission priority amongst the transmission priorities of the available messages of the transmission/reception nodes (100) connected to the transmission medium for the same associated temporal portion (110),

wherein the first and second conditions are specified via a schedule that is determined before the execution:

wherein the schedule is a mode-based schedule that determines for each temporal portion a number of messages to be potentially provided, wherein per temporal portion a maximum of one message is scheduled per execution mode, so that each temporal portion comprises a limited competition sorted by priorities;
wherein execution modes are sorted by preferences and define the transmission priorities of messages associated to these execution modes; and
wherein a temporal portion is associated to several transmission/reception nodes for different execution modes, wherein this temporal portion is associated only once per execution mode upon each occurrence, wherein it is already defined above that execution modes are sorted by preferences.

2. Transmission/reception node (100) according to claim 1, wherein the transmission/reception node (100) is configured to, if the first condition is satisfied and the transmission/reception node (100) comprises an available message, provide the transmission priority of the available message or information derived therefrom to the transmission medium via the interface (102).

3. Transmission/reception node (100) according to claim 1 or 2, wherein the transmission/reception node (100) is configured, if the first condition is satisfied and the transmission/reception node (100) comprises several available messages of different transmission priorities, determine the available message having the highest transmission priority and to provide the determined highest transmission priority or information derived therefrom to the transmission medium via the interface (102).

4. Transmission/reception node (100) according to any one of claims 1 to 3, configured to receive the further transmission priority or the information derived therefrom via the interface (102), and to compare the further received transmission priority or the information derived therefrom to the transmission priority of its own available message or to information derived therefrom in order to detect if the second condition is satisfied.

5. Transmission/reception node (100) according to any one of claims 1 to 4, wherein the second condition is further satisfied if the transmission/reception node (100) does not receive any further transmission priority at the specified temporal portion from the transmission medium via the interface (102).

6. Transmission/reception node (100) according to any one of claims 1 to 5, wherein the temporal portion (110) associated to the transmission/reception node (100) is divided into sub-portions, wherein the transmission/reception node (100) is configured to provide in a first sub-portion (112) the transmission priority of the available message or the information derived therefrom to the transmission medium via the interface (102) and to provide in a further sub-portion (114) the frame of the available message to the transmission medium via the interface (102).

7. Transmission/reception node (100) according to any one of claims 1 to 6, configured to store the available message if only the first condition is satisfied, in order to provide the available message to the transmission medium at a later associated temporal portion.

8. Transmission/reception node (100) according to any one of claims 1 to 7, configured to discard the available message if only the first condition is satisfied.

9. Transmission/reception node (100) according to any one of claims 1 to 8, wherein the transmission/reception node (100) comprises a memory (104) for storing the schedule having the associated temporal portions, or the transmission priority of the message to be provided.

10. Transmission/reception node (100) according to any one of claims 1 to 9, comprising a clock generator and/or a synchronizer for clock synchronization with the further transmission/reception node.

11. Transmission/reception node (100) according to any one of claims 1 to 10, wherein the interface (102) is configured to communicate with a data bus with multi-access in a real time operation.

12. Transmission/reception node (100) according to any one of claims 1 to 11, wherein the messages comprise the available message and the further available message.

13. Bus system (120) having a data bus (122) and a plurality of transmission/reception nodes (100) according to any one of claims 1 to 12.

14. Message for operating a transmission/reception node comprising an interface for setting up a connection to a transmission medium, comprising:

detecting in a sequence of temporal portions the occurrence of a first and a second condition for a temporal portion associated to an available message; and
transmitting a frame of the available message to the transmission medium during the associated temporal portion via the interface if the first and second conditions are satisfied for the associated temporal portion, wherein the first condition indicates according to a schedule the associated temporal portion for providing the frame of the available message, and wherein the second condition indicates that the transmission priority associated to the available message is for the associated temporal portion the highest transmission priority amongst the transmission priorities of the available messages of the transmission/reception nodes connected to the transmission medium for the same associated temporal portion,
wherein the first and second conditions are specified via a schedule that is determined before the execution:

wherein the schedule is a mode-based schedule that determines for each temporal portion a number of messages to be potentially provided, wherein per temporal portion a maximum of one message is scheduled per execution mode, so that each temporal portion comprises a limited competition sorted by priorities;
wherein execution modes are sorted by preferences and define the transmission priorities of messages associated to these execution modes; and
wherein a temporal portion is associated to several transmission/reception nodes for different execution modes, wherein this temporal portion is associated only once per execution mode upon each occurrence, wherein it is already defined above that execution modes are sorted by preferences.

15. Computer program for performing a method according to claim 14 when the computer program runs on a computer or a microprocessor.

**Revendications**

1. Nœud d'émission/de réception (100) avec une interface (102) destinée à établir une connexion avec un moyen de transmission, dans lequel le nœud d'émission/de réception (100) est conçu pour détecter, dans une séquence de segments temporels, la présence d'une première condition et d'une deuxième condition et, si la première et la deuxième condition sont remplies pour un segment temporel associé à un message disponible, pour transmettre au moyen de transmission, pendant le segment temporel associé, une trame du message disponible par l'intermédiaire de l'interface (102), où la première condition indique, selon une planification temporelle, le segment temporel associé pour mettre à disposition la trame du message disponible, et où la deuxième condition indique que la priorité de transmission associée au message disponible est, pour le segment temporel associé, la priorité de transmission la plus élevée parmi les priorités de transmission des messages disponibles des nœuds d'émission/de réception (100) connectés au moyen de transmission pour le même segment temporel associé (110), dans lequel la première et la deuxième condition sont prédéterminées par une planification temporelle qui est déterminée avant l'exécution;
dans lequel la planification temporelle est une planification basée sur le mode qui détermine, pour chaque segment temporel, un nombre de messages potentiellement à mettre à disposition, dans lequel est planifié, par segment temporel, tout au plus un message par mode d'exécution, de sorte que chaque segment temporel présente une concurrence limitée qui est ordonnée selon les priorités;
dans lequel les modes d'exécution sont ordonnés selon les préférences et définissent les priorités de transmission des messages qui sont associés à ces modes d'exécution; et
dans lequel un segment temporel est associé à plusieurs nœuds d'émission/de réception pour différents modes d'exécution, où ce segment temporel n'est, à chaque présence, associé qu'une seule fois par mode d'exécution, où il est déjà défini ci-dessus que les modes d'exécution sont ordonnés selon les préférences.

2. Nœud d'émission/de réception (100) selon la revendication 1, dans lequel le nœud d'émission/de réception (100) est conçu pour mettre à disposition du moyen de transmission, si la première condition est remplie et que le nœud d'émission/de réception (100) présente un message disponible, la priorité de transmission du message disponible ou une information dérivée de cette dernière par l'intermédiaire de l'interface (102).

**3.** Nœud d'émission/de réception (100) selon la revendication 1 ou 2, dans lequel le nœud d'émission/de réception (100) est conçu pour déterminer, si la première condition est remplie et que le nœud d'émission/de réception (100) présente plusieurs messages disponibles à priorité de transmission différente, le message disponible à la priorité de transmission la plus élevée et pour mettre à disposition du moyen de transmission la priorité de transmission la plus élevée déterminée ou une information dérivée de cette dernière par l'intermédiaire de l'interface (102).

**4.** Nœud d'émission/de réception (100) selon l'une des revendications 1 à 3, qui est conçu pour recevoir l'autre priorité de transmission ou l'information dérivée de cette dernière par l'intermédiaire de l'interface (102), et pour comparer l'autre priorité de transmission reçue ou l'information dérivée de cette dernière avec la priorité de transmission du propre message disponible ou d'une information dérivée de cette dernière, pour détecter si la deuxième condition est remplie.

**5.** Nœud d'émission/de réception (100) selon l'une des revendications 1 à 4, dans lequel la deuxième condition est par ailleurs remplie si le nœud d'émission/de réception (100) ne reçoit du moyen de transmission, pendant le segment temporel prédéterminé, pas d'autre priorité de transmission par l'intermédiaire de l'interface (102).

**6.** Nœud d'émission/de réception (100) selon l'une des revendications 1 à 5, dans lequel le segment temporel (100) associé au nœud d'émission/de réception (110) est subdivisé en sous-segments, dans lequel le nœud d'émission/de réception (100) est conçu pour mettre à disposition du moyen de transmission, dans un premier sous-segment (112), la priorité de transmission du message disponible ou l'information dérivée de cette dernière par l'intermédiaire de l'interface (102) et pour mettre à disposition du moyen de transmission, dans un autre sous-segment (114), la trame du message disponible par l'intermédiaire de l'interface (102).

**7.** Nœud de transmission/de réception (100) selon l'une des revendications 1 à 6, qui est conçu pour mémoriser le message disponible si seule la première condition est remplie, pour mettre à disposition du moyen de transmission le message disponible dans un segment temporel ultérieur associé.

**8.** Nœud d'émission/de réception (100) selon l'une des revendications 1 à 7, qui est conçu pour rejeter le message disponible si seule la première condition est remplie.

**9.** Nœud d'émission/de réception (100) selon l'une des revendications 1 à 8, dans lequel le nœud d'émission/de réception (100) présente une mémoire (104) destinée à mémoriser la planification temporelle avec les segments temporels associés ou la priorité de transmission du message à mettre à disposition.

**10.** Nœud d'émission/de réception (100) selon l'une des revendications 1 à 9, qui présente une horloge principale et/ou un moyen de synchronisation pour la synchronisation d'horloge avec les autres nœuds d'émission/de réception.

**11.** Nœud d'émission/de réception (100) selon l'une des revendications 1 à 10, dans lequel l'interface (102) est conçue pour communiquer avec un bus de données à accès multiple pendant le fonctionnement en temps réel.

**12.** Nœud d'émission/de réception (100) selon l'une des revendications 1 à 11, dans lequel les messages présentent le message disponible et l'autre message disponible.

**13.** Système de bus (120) avec un bus de données (122) et une pluralité de nœuds d'émission/de réception (100) selon l'une des revendications 1 à 12.

**14.** Procédé pour faire fonctionner un nœud d'émission/de réception qui présente une interface pour établir une connexion avec un moyen de transmission, aux caractéristiques suivantes consistant à:

    détecter la présence d'une première condition et d'une deuxième condition pour un segment temporel associé à un message disponible d'une séquence de segments temporels; et
    transmettre au moyen de transmission une trame du message disponible pendant le segment temporel associé par l'intermédiaire de l'interface si la première et la deuxième condition sont remplies pour le segment temporel associé,
    dans lequel la première condition indique, selon une planification temporelle, le segment temporel associé pour mettre à disposition la trame du message disponible, et dans lequel la deuxième condition indique que la priorité de transmission associée au message disponible est, pour le segment temporel associé, la priorité de transmission la plus élevée parmi les priorités de transmission des messages disponibles des nœuds d'émission/de réception connectés au moyen de transmission pendant le même segment temporel associé;

dans lequel la première et la deuxième condition sont prédéterminées par une planification temporelle prédéterminée qui est déterminée avant l'exécution;

dans lequel la planification temporelle est une planification basée sur le mode qui détermine, pour chaque segment temporel, un nombre de messages potentiellement à mettre à disposition, dans lequel est planifié, par segment temporel, tout au plus un message par mode d'exécution, de sorte que chaque segment temporel présente une concurrence limitée qui est ordonnée selon les priorités;

dans lequel les modes d'exécution sont ordonnés selon les préférences et définissent les priorités de transmission des messages qui sont associés à ces modes d'exécution; et

dans lequel un segment temporel est associé à plusieurs nœuds d'émission/de réception pour différents modes d'exécution, où ce segment temporel n'est, à chaque présence, associé qu'une seule fois par mode d'exécution.

15. Programme d'ordinateur pour réaliser le procédé selon la revendication 14 lorsque le programme d'ordinateur est exécuté sur un ordinateur ou un microprocesseur.

FIG 1A

FIG 1B

FIG 2

FIG 3

FIG 4

EP 2 421 204 B1

EP 2 421 204 B1

|  | SA | $S_1$ | $S_2$ | $S_3$ | $S_4$ |
|---|---|---|---|---|---|
| Modus I | Notfall | $v_6(100_6)$ | – | $v_6(100_6)$ | – |
| Modus II | Sicherheit | $v_4(100_4)$ | $v_5(100_5)$ | $v_4(100_4)$ | $v_5(100_5)$ |
| Modus III | Regulär | – | $v_2(100_2)$ | – | $v_3(100_3)$ |
| Modus IV | Datenstrom | $v_1(100_1)$ | $v_1(100_1)$ | $v_1(100_1)$ | $v_1(100_1)$ |

FIG 5

FIG 6

170

172    174                    176

FIG 7

180

182              184    186    188

194        190        192

FIG 8

FIG 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1179919 A2

- US 20030137989 A1

### In der Beschreibung aufgeführte Nicht-Patentliteratur

- **VON M. NAUGHTON ; D. HEFFERNAN.** *SMART-Plan: A New Message Scheduler for Real-time Control Networks, ISSC,* 2005
- **VON K. SCHMIDT ; E. G. SCHMIDT.** Systematic Message Schedule Construction for Time-Triggered CAN. *IEEE Transactions on Vehicular Technology, Special Issue on Vehicular Communication Networks,* vol. 56

- **VON E. SCHMIDT ; K. SCHMIDT.** Message Scheduling for the FlexRay Protocol: The Dynamic Segment. *IEEE Transactions on Vehicular Technology,* vol. 58
- **VON K. SCHMIDT ; E. G. SCHMIDT.** Message Scheduling for the FlexRay Protocol: The Static Segment. *IEEE Transactions on Vehicular Technology,* vol. 58
- Optimization for the reliability of TTCAN bus based on Genetic Algorithms. *Coference Proceedings Article,* 21. September 2009